# EUROPÄISCHE PATENTSCHRIFT

(11) **EP 1 058 694 B1**
(45) Veröffentlichungstag und Bekanntmachung des Hinweises auf die Patenterteilung: **09.04.2003**
(21) Anmeldenummer: 99911664.3
(22) Anmeldetag: 13.02.1999
(51) Int. Cl.: C08F 4/643, C08F 10/06

(54) **KATALYSATORSYSTEM, VERFAHREN ZU SEINER HERSTELLUNG UND SEINE VERWENDUNG ZUR POLYMERISATION VON OLEFINEN**
Catalyst system, method for its production and its use for the polymerisation of olefins
Système catalytique, son procédé de préparation et son utilisation dans la polymérisation d'oléfines

(30) Priorität: 27.02.1998 DE 19808253
(43) Veröffentlichungstag der Anmeldung: 13.12.2000
(73) Patentinhaber: Basell Polyolefine GmbH, 67056 Ludwigshafen (DE)
(72) Erfinder: BOHNEN, Hans, D-47441 Moers (DE); FRITZE, Cornelia, D-60529 Frankfurt am Main (DE); KÜBER, Frank, D-61440 Oberursel (DE)
(74) Vertreter: Colucci, Giuseppe
(86) Internationale Anmeldenummer: EP9900956
(87) Internationale Veröffentlichungsnummer: WO99043717

(56) Entgegenhaltungen:
- EP-A- 0 824 113
- WO-A-97/29845
- US-A- 4 898 802
- EISCH, JOHN J. ET AL.: "Rearrangements of organometallic compounds. XI. Duality of mechanism for 1,2-aryl migrations in the oxidation of tetraarylborate salts." J. ORGANOMETAL. CHEM., Bd. 71, Nr. 2, 1974, Seiten C21-C24, XP002105318
- HELLWINKEL, DIETER: "Stereochemistry of organic derivatives of penta- and hexavalent phosphorus. II. First optically active pentaarylphosphorane" CHEM. BER., Bd. 99, Nr. 11, 1966, Seiten 3642-3659, XP002105321
- HELLWINKEL, DIETER ET AL.: "Stereochemistry of organic derivatives of penta- and hexavalent arsenic. Tris(2,2'-biphenylylene)arsenate anion and bis(2,2'-biphenylylene)-2-biphenylarsenic" JUSTUS LIEBIGS ANN. CHEM., Bd. 705, 1967, Seiten 66-75, XP002105319
- PATENT ABSTRACTS OF JAPAN vol. 098, no. 008, 30. Juni 1998 (1998-06-30) & JP 10 060034 A (MITSUI PETROCHEM IND LTD), 3. März 1998 (1998-03-03)

## Beschreibung

Die vorliegende Erfindung betrifft Katalysatorsysteme, ein Verfahren zu ihrer Herstellung und ihre Verwendung in der Polymerisation von Olefinen.

Ziegler Typ Katalysatoren auf der Basis gewinkelter Metallocene mit Metallen der Gruppe 4 bilden eine neue Generation industriell einsetzbarer Katalysatoren zur Polymerisation von α-Olefinen (H.H. Brintzinger, D. Fischer, R. Mülhaupt, R. Rieger, R. Waymouth, Angew. Chem. 1995, 107, 1255-1283).
Zu Erhalt eines aktiven Katalysatorsystems wird der Metallocenkomplex mit einem großen Überschuß an Methylaluminiumoxan (MAO) behandelt (H. Sinn, W. Kaminsky, Adv. Organomet. Chem., 1980, 18, 99). Dies hat neben den hohen Co-Katalysatorkosten den Nachteil eines hohen Aluminiumanteils im erhaltenen Polymer. Deshalb wurden neue Aktivierungsmethoden, die ohne überstöchiometrische Menge an Aktivator auskommen, entwickelt. Die Synthese von "Kationen-ähnlichen" Metallocen-Polymerisationskatalysatoren, wird im J. Am. Chem. Soc. 1991, 113, 3623 beschrieben. Darin erfolgt die Alkylabstraktion von einer Metallocenalkylverbindung mittels Trispentafluorphenylboran, die stöchiometrisch zum Metallocen eingesetzt wird.
In EP-A-0,427,697 wird dieses Syntheseprinzip und ein entsprechendes Katalysatorsystem, bestehend aus einer neutralen Metallocenspezies (z.B. Cp₂ZrMe₂), einer Lewis-Säure (z.B. B(C₆F₅)₃) und Aluminiumalkylen beansprucht. Ein Verfahren zur Herstellung von Salzen der allgemeinen Form LMX⁺ XA⁻ nach dem oben beschriebenen Prinzip wird in EP-A-0,520,732 beansprucht.

EP-A-0,558,158 beschreibt zwitterionische Katalysatorsysteme, die aus Metallocendialkyl-Verbindungen und Salzen der Form [R₃NH]⁺[BPh₄]⁻ dargestellt werden. Die Umsetzung eines solchen Salzes mit z.B. Cp₂*ZrMe₂ liefert durch Protolyse unter Methanabspaltung intermediär ein Zirkonocenmethyl-Kation. Dieses reagiert über C-H-Aktivierung zum Zwitterion Cp₂*Zr⁺-(m-C₆H₄)-BPh₃⁻ ab. Das Zr-Atom ist dabei kovalent an ein Kohlenstoffatom des Phenylringes gebunden und wird über eine agostische Wasserstoffbindung stabilisiert.

In US-A-5,384,299 werden entsprechende Systeme beansprucht, wobei Dimethylaniliniumsalze mit perfluorierten Tetraphenylboraten verwendet werden. Neben der aktivierenden Wirkung der Borat-Salze übt ihre Ligandensphäre eine wichtige Funktion auf das Reaktionsgleichgewicht aus. Große sperrige Liganden verhindern weitgehend die Dimerisierung der Metalloceniumfragmente und drängen somit die Gleichgewichtslage auf die Seite der katalytisch aktiven Spezies. Die bislang beschriebenen einkernigen Borat-Anionen sind durch vier Aryl-Liganden charakterisiert, und können durch den Einbau von sperrigen Gruppen am Liganden Einfluß auf das Reaktionsgleichgewicht nehmen (WO 95/24268). Nachteile dieser Systeme sind die aufwendigen Synthesen, sowie die extreme Empfindlichkeit der resultierenden Metallocenium-Komplexe.

EP-A-824 113 beschreibt ein Katalysatorsystem enthaltend einen Träger, ein Metalloce und eine mehrkernige salzartige-Verbindung, die ein Ligandensystem mit einem Biphenylgrundgerüst wie 2,2' (octafluor) biphenyl enthalten kann, das über die Positionen 2 und 12 mit einem Element der Gruppe IIa, IIIa, IVa oder Va wie Bor verbunden ist.

Die Aufgabe bestand darin ein kostengünstiges Katalysatorsystem bereitzustellen, das die Vorteile sperriger Liganden beinhaltet, jedoch die Nachteile der bestehenden sperrigen Aryl-Liganden ausschließt.

Gegenstand der vorliegenden Erfindung ist ein Katalysatorsystem enthaltend
a) mindestens einen Träger,
b) mindestens ein Metallocen
c) mindestens eine Verbindung der Formel (I) 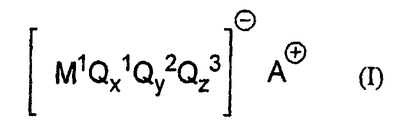
worin
- M¹: ein Element der Gruppen lla, IIIa, IVa oder Va des Periodensystems der Elemente ist,
- x: gleich 0 oder 1 ist,
- y: gleich 0 oder 1 ist,
- z: gleich 0 oder 1 ist,
- A: ein Kation der Gruppe la, IIa, IIIa des Periodensystems der Elemente, ein Carbenium-, Oxonium-, Phosphonium oder Sulfonium-Kation oder eine quatäre Ammonium-Verbindung ist,
- Q¹, Q², Q³: ein Liganden-System, das ausgehend von einem Biphenyl-Grundgerüst über die Positionen 2 und 12 an M¹ gebunden ist, bedeutet und der allgemeinen Formel (II), worin 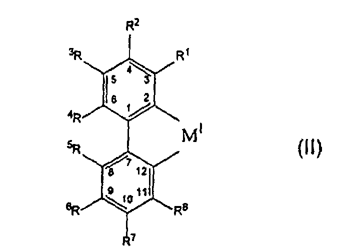
R¹, R², R³, R⁴, R⁵, R⁶, R⁷ und R⁸ gleich oder verschieden sind und ein Wasserstoffatom, ein Halogenatom, eine C₁-C₄₀-kohlenstoffhaltige Gruppe, bevorzugt C₁-C₂₀-Alkyl, C₁-C₂₀-Halogenalkyl, C₁-C₁₀-Alkoxy, C₆-C₄₀-Aryl, C₈-C₄₀-Halogenaryl, C₆-C₄₀-Aryloxy, C₇-C₄₀-Arylalkyl, C₇-C₄₀-Halogenarylalkyl oder C₇-C₄₀-Halogenalkylaryl, oder eine OSiR₃⁹-Gruppe sind, worin R⁹ gleich oder verschieden sind ein Wasserstoffatom, ein Halogenatom, eine C₁-C₄₀-kohlenstoffhaltige Gruppe, bevorzugt C₁-C₂₀-Alkyl, C₁-C₂₀-Halogenalkyl, C₁-C₁₀-Alkoxy, C₆-C₄₀-Aryl, C₆-C₄₀-Halogenaryl, C₆-C₄₀-Aryloxy, C₇-C₄₀-Arylalkyl, C₇-C₄₀-Halogenarylalkyl oder C₇-C₄₀-Halogenalkylaryl, sind und gegebenenfalls zwei oder mehrere Reste R¹ bis R⁸ so miteinander verbunden sind, daß sie ein mono- oder polycyclisches Ringsystem bilden, welches gegebenenfalls substituiert sein kann.

Besonders bevorzugt handelt es sich bei der Verbindungen der Formel (I) um solche, bei denen M¹ gleich Bor ist. Derartige Verbindungen werden durch die Formel (III) beschrieben 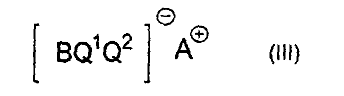 worin
- A: ein Kation der Gruppe la, lla, IIIa des Periodensystems der Elemente, ein Carbenium-, Oxonium-, Phosphonium oder Sulfonium-Kation oder eine quatäre Ammonium-Verbindung ist,
- Q¹ und Q²: gleich oder verschieden sind und ein Liganden-System, das ausgehend von einem Biphenyl-Grundgerüst über die Positionen 2 und 12 an B gebunden ist, bedeutet, wobei Q der allgemeinen Formel (II) entspricht.

Eine gleichermaßen bevorzugte Verbindung der Formel (I) ist eine Verbindung in der M¹ gleich Phosphor ist. Derartige Verbindungen werden durch die Formel (IV) 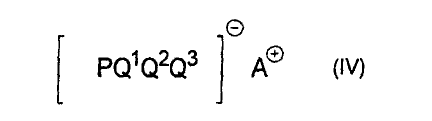 worin
- A: ein Kation der Gruppe Ia, IIa, IIIa des Periodensystems der Elemente, ein Carbenium-, Oxonium-, Phosphonium oder Sulfonium-Kation oder eine quatäre Ammonium-Verbindung ist,
- Q¹, Q², Q³: gleich oder verschieden sind und ein Liganden-System, das ausgehend von einem Biphenyl-Grundgerüst über die Positionen 2 und 12 an P gebunden ist, bedeuten, wobei Q der allgemeinen Formel (II) entspricht.

Besonders bevorzugte aber nicht limitierende Bespiele für die erfindungsgemäße chemische Verbindung der Formeln (III) und (IV) sind:

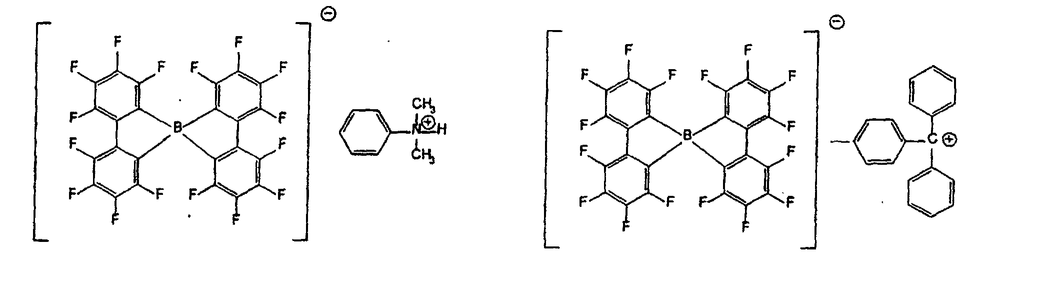

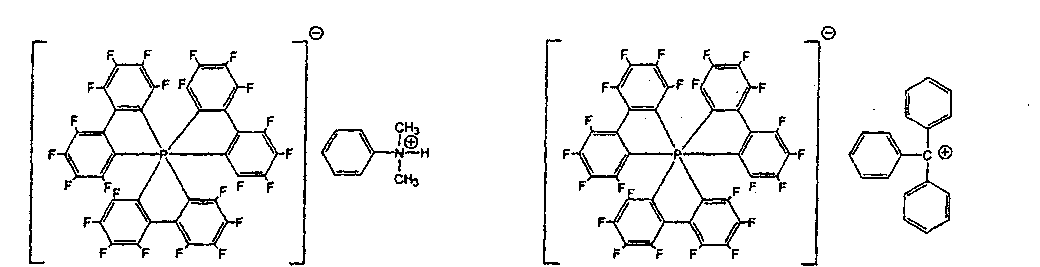

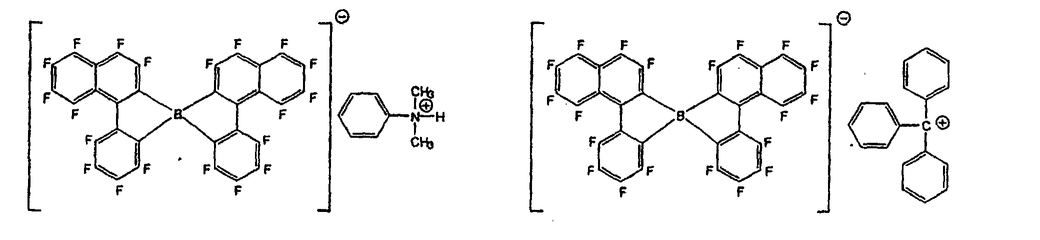

Das erfindungsgemäße Katalysatorsystem enthält mindestens ein Metallocenen, wobei dieses durch das Kation A ionisiert werden kann und sich ein lonenpaar aus Metallocen-Kation und einem nicht bzw. nur schwach koordinierenden Anion ausbildet.

Die erfindungsgemäßen chemische Verbindungen der Formel (II) kann zusammen mit einer Organometallübergangsverbindung als Katalysatorsystem verwendet werden. Als Organometallübergangsverbindung werden z.B. Metallocenverbindungen eingesetzt. Dies können z.B. verbrückte oder unverbrückte Biscyclopentadienylkomplexe sein, wie sie z.B. in EP-A-0 129 368, EP-A-0 561 479, EP-A-0 545 304 und EP-A-0 576 970 beschrieben sind, Monocyclopentadienylkomplexe, wie verbrückte Amidocyclopentadienylkomplexe die z.B. in EP-A-0 416 815 beschrieben sind, mehrkernige Cyclopentadienylkomplexe wie in EP-A-0 632 063 beschrieben, π-Ligand substituierte Tetrahydropentalene wie in EP-A-0 659 758 beschrieben oder π-Ligand substituierte Tetrahydroindene wie in EP-A-0 661 300 beschrieben. Außerdem können Organometallverbindungen eingesetzt werden in denen der komplexierende Ligand kein Cyclopentadienyl-Liganden enthält. Beispiele hierfür sind Diamin-Komplexe der III. und IV. Nebengruppe des Periodensystems der Elemente, wie sie z.B. bei D.H. McConville, et al, Macromolecules, 1996, 29, 5241 und D.H. McConville, et al, J. Am. Chem. Soc., 1996, 118, 10008 beschrieben werden. Außerdem können Diimin-Komplexe der VIII. Nebengruppe des Periodensystems der Elemente (z.B. Ni²⁺ oder Pd²⁺ Komplexe), wie sie *bei Brookhart et al, J. Am. Chem. Soc. 1995, 117, 6414* und , Brookhart et al, J. Am. Chem. Soc., 1996, 118, 267 beschrieben werden, eingesetzt werden. Ferner lassen sich 2,6-bis(imino)pyridyl-Komplexe der VIII. Nebengruppe des Periodensystems der Elemente (z.B. Co²⁺ oder Fe²⁺ Komplexe), wie sie bei Brookhart et al, J. Am. Chem. Soc. 1998, 120, 4049 und Gibson et al, Chem. Commun. 1998, 849 beschrieben werden, einsetzen.

Bevorzugte Metallocenverbindungen sind unverbrückte oder verbrückte Verbindungen der Formel (V), 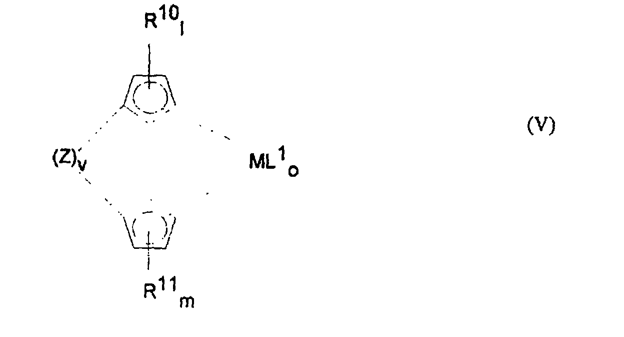 worin
- M: ein Metall der III., IV.. V. oder VI. Nebengruppe des Periodensystems der Elemente ist, insbesondere Ti, Zr oder Hf,
- R¹⁰: gleich oder verschieden sind und ein Wasserstoffatom oder SiR₃¹²sind, worin R¹² gleich oder verschieden ein Wasserstoffatom oder eine C₁-C₄₀-kohlenstoffhaltige Gruppe, bevorzugt C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl, oder R¹⁰ eine C₁-C₃₀ - kohlenstoffhaltige Gruppe, bevorzugt C₁-C₂₅-Alkyl, wie Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl wie Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R¹⁰ können so miteinander verbunden sein, daß die Reste R¹⁰ und die sie verbindenden Atome des Cyclopentadienylringes ein C₄-C₂₄-Ringsystem bilden, welches seinerseits substituiert sein kann,
- R¹¹: gleich oder verschieden sind und ein Wasserstoffatom oder SiR₃¹² sind, worin R¹² gleich oder verschieden ein Wasserstoffatom oder eine C₁-C₄₀-kohlenstoffhaltige Gruppe, bevorzugt C₁-C₂₀-Alkyl, C₁-C₁₀-Fluoralkyl, C₁-C₁₀-Alkoxy, C₆-C₁₄-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl, oder R⁸ eine C₁-C₃₀-kohlenstoffhaltige Gruppe, bevorzugt C₁-C₂₅-Alkyl, wie Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl, wie. Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R¹¹ können so miteinander verbunden sein, daß die Reste R¹¹ und die sie verbindenden Atome des Cyclopentadienylringes ein C₄-C₂₄-Ringsystem bilden, welches seinerseits substituiert sein kann,
- l: gleich 5 für v = 0, und I gleich 4 für v = 1 ist,
- m: gleich 5 für v = 0, und m gleich 4 für v = 1 ist,
- L¹: gleich oder verschieden sein können und ein Wasserstoffatom, eine C₁-C₁₀-Kohlenwasserstoffgruppe wie C₁-C₁₀-Alkyl oder C₆-C₁₀-Aryl, ein Halogenatom, oder OR¹⁶, SR¹⁶, OSiR₃¹⁶, SiR₃¹⁶, PR₂¹⁶ oder NR₂¹⁶bedeuten, worin R¹⁶ ein Halogenatom, eine C₁-C₁₀ Alkylgruppe, eine halogenierte C₁-C₁₀ Alkylgruppe, eine C₆-C₂₀ Arylgruppe oder eine halogenierte C₆-C₂₀ Arylgruppe sind, oder L¹ sind eine Toluolsulfonyl-, Trifluoracetyl-, Trifluoracetoxyl-, Trifluormethansulfonyl-, Nonafluorbutansulfonyl- oder 2,2,2-Trifluorethansulfonyl-Gruppe,
- o: eine ganze Zahl von 1 bis 4, bevorzugt 2 ist,
- Z: ein verbrückendes Strukturelement zwischen den beiden Cyclopentadienylringen bezeichnet und v ist 0 oder 1.

Beispiele für Z sind Gruppen M²R¹³R¹⁴, worin M² Kohlenstoff, Silizium, Germanium oder Zinn ist und R¹³ und R¹⁴ gleich oder verschieden eine C₁-C₂₀kohlenwasserstoffhaltige Gruppe wie C₁-C₁₀-Alkyl, C₆-C₁₄-Aryl oder Trimethylsilyl bedeuten. Bevorzugt ist Z gleich CH₂, CH₂CH₂, CH(CH₃)CH₂, CH(C₄H₉)C(CH₃)₂, C(CH₃)₂, (CH₃)₂Si, (CH₃)₂Ge, (CH₃)₂Sn, (C₈H₅)₂Si, (C₆H₅)(CH₃)Si, (C₆H₅)₂Ge, (C₆H₅)₂Sn, (CH₂)₄Si, CH₂Si(CH₃)₂, o-C₆H₄ oder 2,2'-(C₈H₄)₂. Z kann auch mit einem oder mehreren Resten R¹⁰ und/oder R¹¹ ein mono- oder polycyclisches Ringsystem bilden.

Bevorzugt sind chirale verbrückte Metallocenverbindungen der Formel (V), insbesondere solche in denen v gleich 1 ist und einer oder beide Cyclopentadienylringe so substituiert sind, daß sie einen Indenylring darstellen. Der Indenylring ist bevorzugt substituiert, insbesondere in 2-, 4-, 2,4,5-, 2,4,6-, 2,4,7 oder 2,4,5,6-Stellung, mit C₁-C₂₀-kohlenstoffhaltigen Gruppen, wie C₁-C₁₀-Alkyl oder C₆-C₂₀-Aryl, wobei auch zwei oder mehrere Substituenten des Indenylrings zusammen ein Ringsystem bilden können.

Chirale verbrückte Metallocenverbindungen der Formel (V) können als reine racemische oder reine meso Verbindungen eingesetzt werden. Es können aber auch Gemische aus einer racemischen Verbindung und einer meso Verbindung verwendet werden.

Beispiele für Metallocenverbindungen sind:
Dimethylsilandiylbis(indenyl)zirkoniumdichlorid
Dimethylsilandiylbis(4-naphthyl-indenyl)zirkoniumdichlorid
Dimethylsilandiylbis(2-methyl-benzo-indenyl)zirkoniumdichlorid
Dimethylsilandiylbis(2-methyl-indenyl)zirkoniumdichlorid
Dimethylsilandiylbis(2-methyl-4-(1-naphthyl)-indenyl)zirkoniumdichlorid
Dimethylsilandiylbis(2-methyl-4-(2-naphthyl)-indenyl)zirkoniumdichlorid
Dimethylsilandiylbis(2-methyl-4-phenyl-indenyl)zirkoniumdichlorid
Dimethylsilandiylbis(2-methyl-4-t-butyl-indenyl)zirkoniumdichlorid
Dimethyfsilandiylbis(2-methyl-4-isopropyl-indenyl)zirkoniumdichlorid
Dimethylsilandiylbis(2-methyl-4-ethyl-indenyl)zirkoniumdichlorid
Dimethylsilandlylbis(2-methyl-4- -acenaphth-indenyl)zirkoniumdichlorid
Dimethylsilandiylbis(2,4-dimethyl-indenyl)zirkoniumdichlorid
Dimethylsilandiylbis(2-ethyl-indenyl)zirkoniumdichlorid
Dimethylsilandiylbis(2-ethyl-4-ethyl-indenyl)zirkoniumdichlorid
Dimethylsilandiylbis(2-ethyl-4-phenyl-indenyl)zirkoniumdichlorid
Dimethylsilandiybis(2-methyl-4,5-benzo-indenyl)zirkoniumdichlorid
Dimethylsilandiylbis(2-methyl-4,6 diisopropyl-indenyl)zirkoniumdichlorid
Dimethylsilandiylbis(2-methyl-4,5 diisopropyl-indenyl)zirkoniumdichlorid
Dimethylsilandiylbis(2,4,6-trimethyl-indenyl)zirkoniumdichlorid
Dimethylsilandiylbis(2,5,6-trimethyl-indenyl)zirkoniumdichlorid
Dimethylsilandiylbis(2,4,7-trimethyl-indenyl)zirkoniumdichlorid
Dimethylsilandiylbis(2-methyl-5-isobutyl-indenyl)zirkoniumdichlorid
Dimethylsilandiylbis(2-methyl-5-t-butyl-indenyl)zirkoniumdichlorid
Methyl(phenyl)silandiylbis(2-methyl-4-phenyl-indenyl)zirkoniumdichlorid
Methyl(phenyl)silandiylbis(2-methyl-4,6 diisopropyl-indenyl)zirkoniumdichlorid
Methyl(phenyl)silandiylbis(2-methyl-4-isopropyl-indenyl)zirkoniumdichlorid
Methyl(phenyl)silandiylbis(2-methyl-4,5-benzo-indenyl)zirkoniumdichlorid
Methyl(phenyl)silandiylbis(2-methyl-4,5-(methylbenzo)-indenyl)zirkontumdi-chlorid
Methyl(phenyl)silandiylbis(2-methyl-4,5-(tetramethylbenzo)-indenyl)zirkoniumdichlorid
Methyl(phenyl)silandiylbis(2-methyl-4- -acenaphth-indenyl)zirkoniumdichlorid
Methyl(phenyl)silandiylbis(2-methyl-indenyl)zirkoniumdichlorid
Methyl(phenyl)silandiylbis(2-methyl-5-isobutyl-indenyl)zirkoniumdichlorid
1,2-Ethandiylbis(2-methyl-4-phenyl-indenyl)zirkoniumdichlorid
1,4-Butandiylbis(2-methyl-4-phenyl-indenyl)zirkoniumdichlorid
1,2-Ethandiylbis(2-methyl-4,6 diisopropyl-indenyl)zirkoniumdichlorid
1,4-Butandiylbis(2-methyl-4-isopropyl-indenyl)zirkoniumdichlorid
1,4-Butandiylbis(2-methyl-4,5-benzo-indenyl)zirkoniumdichlorid
1,2-Ethandiylbis(2-methyl-4,5-benzo-indenyl)zirkoniumdichlorid
1,2-Ethandiylbis(2,4,7-trimethyl-indenyl)zirkoniumdichlorid
1,2-Ethandiylbis(2-methyl-indenyl)zirkoniumdichlorid
1,4-Butandiylbis(2-methyl-indenyl)zirkoniumdichlorid
[4-(η⁵-Cyclopentadienyl)-4,6,6-trimethyl-(η⁵-4,5-tetrahydropentalen)]-dichlorozirconium
[4-(η⁵-3'-Trimethylsilyl-cyclopentadienyl)4,6,6-trimethyl-(η⁵-4,5-tetrahydropentalen)]-dichlorozirconium
(4-(η⁵-3'-Isopropyl-cyclopentadienyl)-4,6,6-trimethyl-(η⁵-4,5-tetrahydropentalen)]-dichlorozirconium
[4-(η⁵-Cyclopentadienyl)-4,7,7-trimethyl-(η⁵-4,5,6,7-tetrahydroindenyl)]-dichlorotitan
[4-(η⁵-Cyclopentadienyl)-4,7,7-trimethyl-(η⁵-4,5,6,7-tetrahydroindenyl)]-dichlorozirkonium
[4-(η⁵-Cyclopentadienyl)-4,7,7-trimethyl-(η⁵-4,5,6,7-tetrahydroindenyl)]-dichlorohafnium
[4-(η⁵-3'-tert.Butyl-cyclopentadienyl)-4,7,7-trimethyl-(η⁵-4,5,6,7-tetrahydroindenyl)]-dichlorotitan
4-(η⁵-3'-Isopropylcyclopentadienyl)-4,7,7-trimethyl-(η⁵-4,5,6,7-tetrahydroindenyl)]-dichlorotitan
4-(η⁵-3'-Methylcyclopentadlenyl)-4,7,7-trimethyl-(η⁵-4,5,6,7-tetrahydroindenyl)]-dichlorotitan
4-(η⁵-3'-Trimethylsilyl-cyclopentadienyl)-2-trimethylsilyl-4,7,7-trimethyl-(η⁵-4,5,6,7-tetrahydroindenyl)]-dichlorotitan
4-(η⁵-3'-tert.Butyl-cyclopentadienyl)-4,7,7-trimethyl-(η⁵-4,5,6,7-tetrahydroindenyl)]-dichlorozirkonium
(Tertbutylamido)-(tetramethyl-η⁵-cyclopentadienyl)-dimethylsilyl-dichlorotitan
(Tertbutylamido)-(tetramethyl-η⁵-cyclopentadienyl)-1,2-ethandiyl-dichlorotitandichlorotitan
(Methylamido)-(tetramethyl-η⁵-cyclopentadienyl)-dimethylsilyl-dichlorotitan
(Methylamido)-(tetramethyl-η⁵-cyclopentadienyl)-1,2-ethandiyl-dichlorotitan
(Tertbutylamido)-(2,4-dimethyl-2,4-pentadien-1-yl)-dimethylsilyl-dichlorotitan
Bis-(cyclopentadienyl)-zirkoniumdichlorid
Bis-(n-butylcyclopentadienyl)-zirkoniumdichlorid
Bis-(1,3-dimethylcyclopentadienyl)-zirkoniumdichlorid
Tetrachloro-[1-[bis(η⁵-1H-inden-1-yliden)methylsilyl]-3-η⁵-cyclopenta-2,4-dien-1-yliden)-3-η⁵-9H-fluoren-9-yliden)butan]di-zirkonium
Tetrachloro-[2-[bis(η⁵-2-methyl-1H-inden-1-yliden)methoxysilyl]-5-(η⁵-2,3,4,5-tetramethylcyclopenta-2,4-dien-1-yliden)-5-(η⁵-9H-fluoren-9-yliden)hexan]dizirkonium
Tetrachloro-[1-[bis(η⁵-1H-inden-1-yliden)methylsilyl]-6-(η⁵-cyclopenta-2,4-dien-1-yliden)-6-(η⁵-9H-fluoren-9-yliden)-3-oxaheptan]di-zirkonium
Dimethylsilandiylbis(2-methyl-4-(tert-butyl-phenyl-indenyl)-zirkoniumdichlorid
Dimethylsilandiylbis(2-methyl-4-(4-methyl-phenyl-indenyl)zirkoniumdichlorid
Dimethylsilandiylbis(2-methyl-4-(4-ethyl-phenyl-indenyl)zirkoniumdichlorid
Dimethylsilandiylbis(2-methyl-4-(4-trifluormethyl-phenyl-indenyl)zirkoniumdichlorid
Dimethylsilandiylbis(2-methyl-4-(4-methoxy-phenyl-indenyl)zirkoniumdichlorid
Dimethylsilandiylbis(2-ethyl-4-(4-tert-butyl-phenyl-indenyl)zirkoniumdichlorid
Dimethylsilandiylbis(2-ethyl-4-(4-methyl-phenyl-indenyl)zirkoniumdichlorid
Dimethylsilandiylbis(2-ethyl-4-(4-ethyl-phenyl-indenyl)zirkoniumdichlorid
Dimethylsilandiylbis(2-ethyl-4-(4-trifluormethyl-phenyl-indenyl)zirkoniumdichlorid
Dimethylsilandiylbis(2-ethyl-4-(4-methoxy-phenyl-indenyl)zirkoniumdichlorid
Dimethylsilandiylbis(2-methyl-4-(4-tert-butyl-phenyl-indenyl)zirkoniumdimethyl
Dimethylsilandiylbis(2-methyl-4-(4-methyl-phenyl-indenyl)zirkoniumdimethyl
Dimethylsilandiylbis(2-methyl-4-(4-ethyl-phenyl-indenyl)zirkoniumdimethyl
Dimethylsilandiylbis(2-methyl-4-(4-trifluormethyl-phenyl-indenyl)zirkoniumdimethyl
Dimethylsilandiylbis(2-methyl-4-(4-methoxy-phenyl-indenyl)zirkoniumdimethyl
Dimethylsilandiylbis(2-ethyl-4-(4-tert-butyl-phenyl-indenyl)zirkoniumdimethyl
Dimethylsilandiylbis(2-ethyl-4-(4-methyl-phenyl-indenyl)zirkoniumdimethyl
Dimethylsilandiylbis(2-ethyl-4-(4-ethyl-phenyl-indenyl)zirkoniumdiethyl
Dimethylsilandiylbis(2-ethyl-4-(4-trifluormethyl-phenyl-indenyl)zirkoniumdimethyl
Dimethylsilandiylbis(2-ethyl-4-(4-methoxy-phenyl-indenyl)zirkoniumdimethyl

Das erfindungsgemäße Katalysatorsystem kann zusätzlich eine Aluminiumverbindung der Formel (VI) 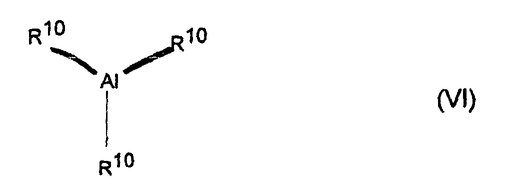 enthalten.

Die Reste R¹⁰ in Formel (VI) können gleich oder verschieden sein und ein Halogenatom, ein Wasserstoffatom, eine C₁-C₄₀-kohlenstoffhaltige Gruppe, bevorzugt C₁-C₂₀-Alkyl, C₁-C₂₀-Halogenalkyl, C₆-C₂₀-Aryl, C₆-C₂₀-Halogenaryl, C₇-C₄₀-Arylalkyl, C₇-C₄₀-Halogenarylalkyl, C₇-C₄₀-Alkylaryl oder C₇-C₄₀-Halogenalkylaryl, bedeuten.
Bevorzugt für R¹⁰ sind C₁-C₆-Alkyl-Gruppen, besonders bevorzugt für R¹⁰ sind C₁-C₄-Alkyl-Gruppen.

Die Aluminiumverbindung kann dabei die gleiche sein wie die, welche zur Herstellung der cokatalytisch wirkenden Verbindung verwendet wird, sie kann von dieser aber auch verschieden sein.

Bevorzugte Aluminiumverbindungen sind
Trimethylaluminium, Triethylaluminium, Triisopropylaluminium, Trihexylaluminium, Trioctylaluminium, Tri-n-butylaluminium, Tri-n-propylaluminium, Triisoprenaluminium, Dimethylaluminiummonochlorid, Diethylaluminiummonochlorid, Diisobutylaluminiummonochlorid, Methylaluminiumsesquichlorid, Ethylaluminiumsesquichlorid, Dimethylaluminiumhydrid, Diethylaluminiumhydrid, Diisopropylaluminiumhydrid, Dimethylaluminium(trimethylsiloxid), Dimethylaluminium(triethylsiloxid), Phenylalan, Pentafluorphenylalan oder o-Tolytalan

Besonders bevorzugt sind Trimethylaluminium, Triethylaluminium und Triisobutylaluminium.

Die Herstellung einer erfindungsgemäßen chemischen Verbindung der Formel (I) kann z.B. nach folgendem Reaktionsschema ablaufen.

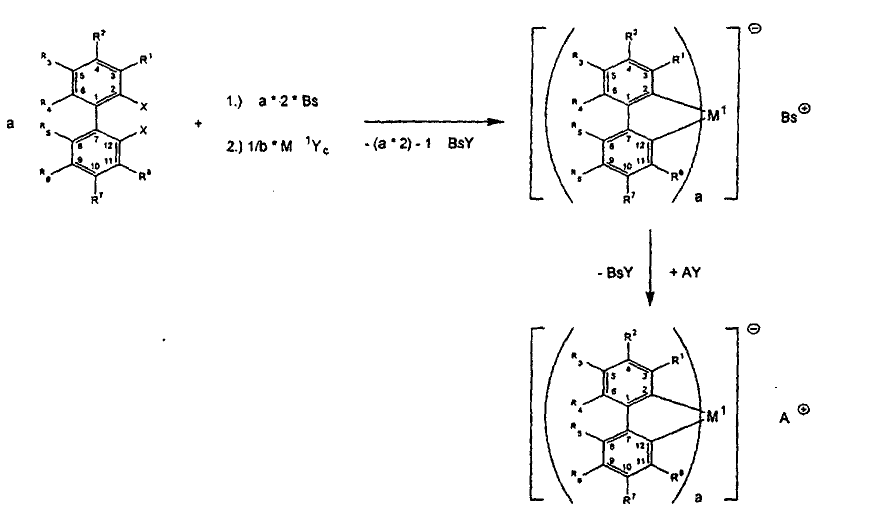

Hierbei ist
- Bs: eine Base, bevorzugt ein Element der Gruppen la und IIa des Periodensystems der Elemente oder eine Organolithium-Verbindung oder eine Grignard-Verbindung
- X: unabhängig voneinander gleich oder verschieden eine Abgangsgruppe, bevorzugt Wasserstoff- oder ein Halogen-Atom,
- Y: unabhängig voneinander gleich oder verschieden eine Abgangsgruppe, bevorzugt ein Wasserstoff- oder ein Halogen-Atom,
- M¹: ein Element der Gruppen lla, IIIa, IVa oder Va des Periodensystems der Elemente,
- A: ein Kation der Gruppe Ia, IIa, IIIa des Periodensystems der Elemente, ein Carbenium-, Oxonium- oder Sulfonium-Kation oder eine quatäre Ammonium-Verbindung,
- a: gleich 2 oder 3,
- b: eine ganze Zahl zwischen 2 und 5 und
- c: eine ganze Zahl zwischen 2 und 5.

Zur Herstellung des erfindungsgemäßen Katalysatorsystems kann ein oder mehrere Metallocene der Formel (V) mit einer oder mehrerer Verbindungen der Formel (I) in jedem beliebigen stöchiometrischen Verhältnis umgesetzt werden. Als Lösemittel werden dabei aliphatische oder aromatische Lösemittel wie Toluol, Heptan, Isododekan, Tetrahydrofuran oder Diethylether eingesetzt. Es können aber auch Lösemittelgemische verwendet werden.
Eine mögliche Verfahrensweise ist, daß eine chemische Verbindung der Formel (V) in einem aliphatischen oder aromatischen Lösemittel gelöst bzw. suspendiert wird. Im Anschluß daran wird eine oder mehrere chemische Verbindungen der Formel (I) in Substanz oder in gelöster bzw. suspendierter Form zugegeben. Die Reaktionszeit liegt zwischen 1 Minute und 24 Stunden, wobei eine Reaktionszeit zwischen 5 Minuten und 120 Minuten bevorzugt wird. Die Reaktionstemperatur liegt zwischen - 10°C und +200°C, wobei eine Temperatur zwischen 20°C und 70°C bevorzugt wird. Alle Edukte können in jedem beliebigen stöchiometrischen Verhältnis eingesetzt werden. Bevorzugt sind Umsetzungen in denen das stöchiometrische Verhältnis von Verbindungen der Formel (V): Verbindungen der Formel (I) zwischen 1 : 0.1 und 1 : 200 liegt. Besonders bevorzugt sind Umsetzungen in denen das stöchiometrische Verhältnis von Verbindungen der Formel (V) : Verbindungen der Formel (I) zwischen 1:1 und 1:20 ist.
Eine weitere mögliche Herstellung des erfindungsgemäßen Katalysatorsystems ist, daß ein oder mehrere Metallocene der Formel (V) mit einer oder mehrerer Verbindungen der Formel (I) und einer oder mehrerer Aluminiumverbindungen der Formel (VI) in jedem beliebigen stöchiometrischen Verhältnis umgesetzt werden. Als Lösemittel werden dabei aliphatische oder aromatische Lösemittel wie Toluol, Heptan, Tetrahydrofuran oder Diethylether eingesetzt. Es können aber auch Lösemittelgemische verwendet werden. Eine mögliche Verfahrensweise ist, daß ein oder mehrere Metallocene der Formel (V) in einem aliphatischen oder aromatischen Lösemittel gelöst bzw. suspendiert wird. Im Anschluß daran wird eine oder mehrere erfindungsgemäße Verbindungen der Formel (I) entweder in Substanz oder in gelöster bzw. suspendierter Form zugegeben. Die Reaktionszeit liegt zwischen 1 Minute und 24 Stunden, wobei eine Reaktionszeit zwischen 5 Minuten und 120 Minuten bevorzugt wird. Die Reaktionstemperatur liegt zwischen -10°C und +200°C,
wobei eine Temperatur zwischen 20°C und 70°C bevorzugt wird. Danach wird eine Aluminium-Verbindung der Formel (VI) in gelöster bzw. suspendierter Form zugegeben. Die Reaktionszeit liegt zwischen 1 Minute und 24 Stunden, wobei eine Reaktionszeit zwischen 5 Minuten und 120 Minuten bevorzugt wird. Die Reaktionstemperatur liegt zwischen -10°C und +200°C, wobei eine Temperatur zwischen 20°C und 70°C bevorzugt wird. Alle Edukte können in jedem beliebigen, stöchiometrischen Verhältnis eingesetzt werden. Bevorzugt sind Umsetzungen in denen das stöchiometrische Verhältnis von Metallocenen der
Formel (V):Verbindungen (I) zwischen 1 : 0.1 und 1 : 200 liegt und von Metallocenen der Formel (V) : Aluminium-Verbindungen der Formel (VI) zwischen 1 : 0.01 und 1 : 400 liegt. Besonders bevorzugt sind Umsetzungen in denen das stöchiometrische Verhältnis von Metallocenen der Formel (V) : Verbindungen (I) zwischen 1 : 1 und 1 : 20 liegt und von Metallocenen der Formel (V) : Aluminium-Verbindungen der Formel (VI) zwischen 1 : 1 und 1 : 10 liegt. Die Reihenfolge der Zugabe der einzelnen Komponenten kann aber auch beliebig vertauscht sein, so daß z.B. zuerst eine Aluminium-Verbindung der Formel (VI), anschließend ein oder mehrere Metallocene der Formel (V) und dann eine oder mehrere Verbindungen der Formel (I) zugegeben werden. Das erhaltene Katalysatorsystem kann direkt in den Polymerisationsautoklav eingespritzt werden.

Die erfindungsgemäßen Katalysatorsysteme enthalten mindestens einen Träger. Beispiele für derartige Träger sind anorganische Oxide, wie Siliziumoxid. Aluminiumoxid, Zeolithe, MgO, ZrO₂, TiO₂, B₂O₃, CaO, ZnO, ThO₂, Na₂CO₃, K₂CO₃, CaCO₃, MgCO₃, Na₂SO₄, Al₂(SO₄)₃, BaSO₄, KNO₃, Mg(NO₃)₂, Al(NO₃)₃ ,Na₂O, K₂O, oder Li₂O, insbesondere Siliziumoxid und/oder Aluminiumoxid. Der Träger kann auch mindestens ein Polymer enthalten, z.B. ein Homo- oder Copolymer, ein vernetztes Polymer oder Polymerblends. Beispiele für Polymere sind Polyethylen, Polypropylen, Polybuten, Polystyrol, mit Divinylbenzol vernetztes Polystyrol, Polyvinylchlorid, Acryl-Butadien-Styrol-Copolymer, Polyamid, Polymethacrylat, Polycarbonat, Polyester, Polyacetal oder Polyvinylalkohol.

Der Träger weist eine spezifische Oberfläche im Bereich von 10 bis 1000 m²/g, bevorzugt von 150 bis 500 m²/g auf. Die mittlere Partikelgröße des Trägers beträgt 1 bis 500 µm, bevorzugt 5 bis 350 µm, besonders bevorzugt 10 bis 200 µm.

Bevorzugt ist der Träger porös mit einem Porenvolumen des Trägers von 0,5 bis 4,0 ml/g, bevorzugt 1,0 bis 3,5 ml/g. Ein poröser Träger weist einen gewissen Anteil an Hohlräumen (Porenvolumen) auf. Die Form der Poren ist meist unregelmäßig, häufig sphärisch ausgebildet. Die Poren können durch kleine Porenöffnungen miteinander verbunden sein. Der Porendurchmesser beträgt vorzugsweise etwa 2 bis 50 nm. Die Partikelform des porösen Trägers ist abhängig von der Nachbehandlung und kann irregulär oder sphärisch sein. Die Teilchengröße des Trägers kann z. B. durch kryogene Mahlung und/oder Siebung beliebig eingestellt werden.

Das Trägermaterial kann zudem mit einer Aluminium-Verbindung vorbehandelt sein. Die Aluminium-Verbindung der Formel (VI) kann dabei dieselbe sein, welche zur Herstellung des Katalysatorsystems verwendet wird, kann aber auch davon verschieden sein. Außerdem kann das Trägermaterial auch mit anderen chemischen Verbindungen wie z.B. Trimethylchlorsilan, Tetrachlorsilan, Bortrichlorid, Aminen wie Phenyldimethylamin, Pyridin, N,N-Dimethylanilin, Mercaptanen wie Mercaptopropylmethyldimethoxysilan, Benzylchlorid, Phenylmethylchlorid oder Tosylaten vorbehandelt sein.

Das erfindungsgemäße Katalysatorsystem kann in jeder möglichen Kombination mit dem Träger in Kontakt gebracht werden.

Eine mögliche Variante ist, daß das Katalysatorsystem in Lösung hergestellt wird und anschließend mit dem Träger umgesetzt wird. Dazu wird ein oder mehrere Metallocene der Formel (V) in einem aliphatischen oder aromatischen Lösemittel wie Toluol, Heptan, Cyclohexan, Isododekan oder Tetrahydrofuran vorgelegt. Anschließend wird eine oder mehrere Verbindungen der Formel (I) entweder in Substanz oder in gelöster bzw. suspendierter Form zugegeben. Die Reaktionszeit liegt zwischen 1 Minute und 24 Stunden, wobei eine Reaktionszeit zwischen 5 Minuten und 120 Minuten bevorzugt wird. Die Reaktionstemperatur liegt zwischen - 10°C und +200°C, wobei eine Temperatur zwischen 20°C und 70°C bevorzugt wird. Danach erfolgt die Zugabe einer Aluminium-Verbindung der Formel (VI). Auch hier liegt die Reaktionszeit liegt zwischen 1 Minute und 24 Stunden, wobei eine Reaktionszeit zwischen 5 Minuten und 120 Minuten bevorzugt wird. Die Reaktionstemperatur liegt zwischen -10°C und +200°C, wobei eine Temperatur zwischen 20°C und 70°C bevorzugt wird. Alle Edukte können in jedem beliebigen, stöchiometrischen Verhältnis eingesetzt werden. Bevorzugt sind Umsetzungen in denen das stöchiometrische Verhältnis von Metallocenen der Formel (V) : Verbindungen (I) zwischen 1 : 0.1 und 1 : 200 liegt und von Metallocenen der Formel (V) : Aluminium-Verbindungen der Formel (VI) zwischen 1 : 0.01 und 1 : 400 liegt. Besonders bevorzugt sind Umsetzungen in denen das stöchiometrische Verhältnis von Metallocenen der Formel (V) : Verbindungen (I) zwischen 1 : 1 und 1 : 20 liegt und von Metallocenen der Formel (V) : Aluminium-Verbindungen der Formel (VI) zwischen 1 : 1 und 1 : 10 liegt. Die Reihenfolge der Zugabe der einzelnen Komponenten kann aber auch beliebig vertauscht sein, so daß beispielsweise zuerst eine Aluminiumverbindung der Formel (VI), anschließend ein oder mehrere Metallocene der Formel (V) und dann eine oder mehrere Verbindungen der Formel (I) zugegeben werden. Das Katalysatorsystem wird anschließend in Lösung zu dem Trägermaterial zugegeben. Das Trägermaterial kann dabei in einem Lösemittel suspendiert sein kann aber auch als Pulver vorgelegt werden.

Das geträgerte Katalysatorsystem kann direkt zur Polymerisation eingesetzt werden. Es kann aber auch nach Entfernen des Lösemittels resuspendiert zur Polymerisation eingesetzt werden.

Bevorzugt werden Olefine der Formel R^{α}-CH=CH-R^{β} polymerisiert, worin R^{α} und R^{β} gleich oder verschieden sind und ein Wasserstoffatom, ein Halogenatom, eine Alkoxy-, Hydroxy-, Alkylhydroxy-, Aldehyd, Carbonsäure- oder Carbonsäureestergruppe oder einen gesättigten oder ungesättigten Kohtenwasserstoffrest mit 1 bis 20 C-Atomen, insbesondere 1 bis 10 C-Atomen bedeuten, der mit einer Alkoxy-, Hydroxy-, Alkylhydroxy-, Aldehyd-, Carbonsäureoder Carbonsäureestergruppe substituiert sein kann, oder R^{α} und R^{β} mit den sie verbindenden Atomen einen oder mehrere Ringe bilden. Beispiele für solche Olefine sind 1-Olefine wie Ethylen, Propylen, 1-Buten, 1-Hexen, 4-Methyl-1-penten, 1-Octen, Styrol, cyclische Olefine wie Norbornen, Vinylnorbornen, Tetracyclododecen, Ethylidennorbomen, Diene wie 1,3-Butadien oder 1,4-Hexadien, Biscyclopentadien oder Methacrylsäuremethylester.

Insbesondere werden Propylen oder Ethylen homopolymerisiert, Ethylen mit einem oder mehreren C₃-C₂₀-1-Olefinen, insbesondere Propylen, und /oder einem oder mehreren C₄-C₂₀-Diene, insbesondere 1,3-Butadien, copolymerisiert oder Norbornen und Ethylen copolymerisiert.
Die Polymerisation wird bevorzugt bei einer Temperatur von - 60 bis 300 °C, besonders bevorzugt 30 bis 250 °C, durchgeführt. Der Druck beträgt 0,5 bis 2500 bar, bevorzugt 2 bis 1500 bar. Die Polymerisation kann kontinuierlich oder diskontinuierlich, ein- oder mehrstufig, in Lösung, in Suspension, in der Gasphase oder in einem überkritischem Medium durchgeführt werden.

Das geträgerte Katalysatorsystem kann als Pulver oder noch Lösemittel behaftet wieder resuspendiert und als Suspension in einem inerten Suspensionsmittel in das Polymerisationssystem eindosiert werden.

Mit Hilfe des erfindungsgemäßen Katalysatorsystems kann eine Vorpolymerisation erfolgen. Zur Vorpolymerisation wird bevorzugt das (oder eines der) in der Polymerisation eingesetzte(n) Olefin(e) verwendet.

Zur Herstellung von Olefinpolymeren mit breiter Molekulargewichtsverteilung werden bevorzugt Katalysatorsysteme verwendet, die zwei oder mehr verschiedene Übergangsmetallverbindungen, z. B. Metallocene enthalten.

Zur Entfernung von im Olefin vorhandenen Katalysatorgiften ist eine Reinigung mit einem Aluminiumalkyl, beispielsweise Trimethylaluminium, Triethylaluminium oder Triisobutylaluminium vorteilhaft. Diese Reinigung kann sowohl im Polymerisationssystem selbst erfolgen oder das Olefin wird vor der Zugabe in das Polymerisationssystem mit der AI-Verbindung in Kontakt gebracht und anschließend wieder getrennt.

Als Molmassenregler und/oder zur Steigerung der Aktivität wird, falls erforderlich, Wasserstoff zugegeben. Der Gesamtdruck im Polymerisationssystem beträgt 0,5 bis 2500 bar, bevorzugt 2 bis 1500 bar.
Dabei wird die erfindungsgemäße Verbindung in einer Konzentration, bezogen auf das Übergangsmetall von bevorzugt 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet.

Geeignete Lösemittel zur Darstellung sowohl der erfindungsgemäßen geträgerten chemischen Verbindung als auch des erfindungsgemäßen Katalysatorsystems sind aliphatische oder aromatische Lösemittel, wie beispielsweise Hexan oder Toluol, etherische Lösemittel, wie beispielsweise Tetrahydrofuran oder Diethylether oder halogenierte Kohlenwasserstoffe, wie beispielsweise Methylenchlorid oder halogenierte aromatische Kohlenwasserstoffe wie beispielsweise o-Dichlorbenzol. Vor Zugabe des Katalysatorsystems enthaltend mindestens eine erfindungsgemäße geträgerte chemische Verbindung der Formel I und mindestens eine Metallocene- Übergangsmetallverbindung kann zusätzlich eine andere Alkylaluminiumverbindung wie beispielsweise Trimethylaluminium, Triethylaluminium, Triisobutylaluminium, Trioctylaluminium oder Isoprenylaluminium zur Inertisierung des Polymerisationssystems (beispielsweise zur Abtrennung vorhandener Kata(ysatorgifte im Olefin) in den Reaktor gegeben werden. Diese wird in einer Konzentration von 100 bis 0,01 mmol AI pro kg Reaktorinhalt dem Polymerisationssystem zugesetzt. Bevorzugt werden Triisobutylaluminium und Triethylaluminium in einer Konzentration von 10 bis 0,01 mmol AI pro kg Reaktorinhalt eingesetzt, dadurch kann bei der Synthese eines geträgerten Katalysatorsystems das molare AI/M-Verhältnis klein gewählt werden.

Weiterhin kann bei dem erfindungsgemäßen Verfahren ein Additiv wie ein Antistatikum verwendet werden z.B. zur Verbesserung der Kornmorphologie des Olefinpolymers. Generell können alle Antistatika, die für die Polymerisation geeignet sind, verwendet werden. Beispiele hierfür sind Salzgemische aus Calciumsalzen der Medialansäure und Chromsalze der N-Stearylanthranilsäure, die in DE-A-3,543,360 beschreiben werden. Weitere geeignete Antistatika sind z.B. C₁₂- bis C₂₂-Fettsäureseifen von Alkali- oder Erdalkalimetallen, Salze von Sulfonsäureestem, Ester von Polyethylenglycolen mit Fettsäuren, Polyoxyethylenalkylether usw. Eine Übersicht über Antistatika wird in EP-A-0,107,127 angegeben.

Außerdem kann als Antistatikum eine Mischung aus einem Metallsalz der Medialansäure, einem Metallsalz der Anthranilsäure und einem Polyamin eingesetzt werden, wie in EP-A-0,636,636 beschrieben.

Kommerziell erhältliche Produkte wie Stadis® 450 der Fa. DuPont, eine Mischung aus Toluol, Isopropanol, Dodecylbenzolsulfonsäure, einem Polyamin, einem Copolymer aus Dec-1-en und SO₂ sowie Dec-1-en oder ASA®-3 der Fa. Shell und ARU5R® 163 der Firma ICI können ebenfalls verwendet werden.

Vorzugsweise wird das Antistatikum als Lösung eingesetzt, im bevorzugten Fall von Stadis® 450 werden bevorzugt 1 bis 50 Gew.-% dieser Lösung, vorzugsweise 5 bis 25 Gew.-%, bezogen auf die Masse des eingesetzten Trägerkatalysators (Träger mit kovalent fixierter metalloceniumbildende Verbindung und eine oder mehrere Metallocenverbindungen z.B. der Formel IV) eingesetzt. Die benötigten Mengen an Antistatikum können jedoch, je nach Art des eingesetzten Antistatikums, in weiten Bereichen schwanken.

Die eigentliche Polymerisation wird vorzugsweise in flüssigen Monomer (bulk) oder in der Gasphase durchgeführt.

Das Antistatikum kann zu jedem beliebigen Zeitpunkt zur Polymerisation zudosiert werden. Zum Beispiel ist eine bevorzugte Verfahrensweise die, daß das geträgerte Katalysatorsystem in einem organischen Lösemittel, bevorzugt Alkane wie Heptan oder Isododekan, resuspendiert wird. Anschließend wird es unter Rühren in den Polymerisationsautoklav zugegeben. Danach wird das Antistatikum zudosiert. Die Polymerisation wird bei Temperaturen im Bereich von 0 bis 100/C durchgeführt. Eine weitere bevorzugte Verfahrensweise ist, daß das Antistatikum vor Zugabe des geträgerten Katalysatorsystems in den Polymerisationsautoklav zudosiert wird. Anschließend wird das resuspendierte geträgerte Katalysatorsystem unter Rühren bei Temperaturen im Bereich von 0 bis 100°C zudosiert. Die Polymerisationszeit kann im Bereich von 0,1 bis 24 Stunden. Bevorzugt ist eine Polymerisationszeit im Bereich von 0,1 bis 5 Stunden.

Bei dem vorstehend beschriebenen Verfahren treten keine Reaktorbeläge auf, es bilden sich keine Agglomerate und die Produktivität des eingesetzten Katalysatorsystems ist hoch. Die mit dem erfindungsgemäßen Verfahren hergestellten Polymere zeichnen sich durch eine enge Molekulargewichtsverteilung und gute Kommorphologie aus.

### Die nachfolgenden Beispiele dienen zur näheren Erläuterung der Erfindung

Allgemeine Angaben: Herstellung und Handhabung der Verbindungen erfolgten unter Ausschluß von Luft und Feuchtigkeit unter Argonschutz (Schlenk-Technik). Alle benötigten Lösemittel wurden vor Gebrauch durch mehrstündiges Sieden über geeignete Trockenmittel und anschließende Destillation unter Argon absolutiert.

### Beispiel 1: Synthese von 2,2'-Dibrom-octafluoro-biphenyl

10g 1,2-Dibromtetrafluorbenzol (32mmol) werden in 100 ml Diethylether vorgelegt und auf -78°C gekühlt. Es werden 15 ml n-Butyllithium (2,5 M in Hexan) zugetropft und 1 Stunde gerührt. Anschließend wird ein Überschuß an Titantetrachlorid zugegeben und weitere 4 Stunden bei -78°C gerührt. Man läßt die Suspension auf Raumtemperatur erwärmen und rührt 10 Stunden nach. Danach wird mit H₂O hydrolysiert. Die wäßrige Phase wird mehrmals mit Diethylether ausgeschüttelt und anschließend werden die organischen Phasen vereinigt und über Magnesiumsulfat getrocknet. Das Lösemittel wird abgezogen und der verbleibende Rückstand aus einem 1:1 Gemisch aus Diethylether/n-Pentan umkristallisiert.
¹⁹F-NMR CDCl₃: -127.5 ppm (m, 2F, 3,3'-F), -134,6 ppm (m, 2F, 6,6'-F), -149,9 ppm (m, 2F, 4,4'-F), -154,3 ppm (m, 2F, 5,5'-F)

### Beispiel 2: Synthese von N,N-Dimethylanilinium-bis(2,2'-octafluorobiphenyl)borat

4.6 g (10 mmol) 2,2'-Dibrom-octafluoro-biphenyl werden in 30 ml Diethylether vorgelegt und bei -78°C gerührt. Anschließend werden 8 ml n-Butyllithium (2M in Hexan) zugetropft und die Suspension wird 2 Stunden bei -78°C gerührt. Danach werden 5 ml Bortrichlorid (1M in Hexan) zugetropft und die Suspension wird auf Raumtemperatur erwärmt. Das Lösemittel wird im Vakuum abgezogen und der verbleibende Rückstand mit 100 ml Pentan ausgerührt. Anschließend werden 0.79 g N,N Dimethylaniliniumchlorid portionsweise zugegeben und 5 Stunden nachgerührt. Der erhaltene Feststoff wird filtriert und mit 50 ml Methylenchlorid extrahiert. Das erhaltene Filtrat wird im Vakuum eingeengt und der resultierende Feststoff aus einem Methylenchlorid/Pentan-Gemisch (1:1) umkristallisiert.
¹⁹F-NMR CDCl₃: -137.2 ppm (m, 2F, 3,3'-F), -138.4 ppm (m, 2F, 6,6'-F), -159,9 ppm (m, 2F, 4,4'-F), -160.9 ppm (m, 2F, 5,5'-F)

### Beispiel 3: Synthese von Triphenylcarbenium-bis(2,2'-octafluorobiphenyl)borat

4.6 g (10 mmol) 2,2'-Dibrom-octafluoro-biphenyl werden in 30 ml Diethylether vorgelegt und bei -78°C gerührt. Anschließend werden 8 ml n-Butyllithium (2M in Hexan) zugetropft und die Suspension wird 2 Stunden bei -78°C gerührt. Danach werden 5 ml Bortrichlorid (1M in Hexan) zugetropft und die Suspension wird auf Raumtemperatur erwärmt. Das Lösemittel wird im Vakuum abgezogen und der verbleibende Rückstand mit 100 ml Pentan ausgerührt. Anschließend werden 1.39 g Triphenylchlormethan portionsweise zugegeben und 10 Stunden nachgerührt. Der erhaltene Feststoff wird filtriert und mit 70 ml Methylenchlorid extrahiert. Das erhaltene Filtrat wird im Vakuum eingeengt und der resultierende Feststoff aus einem Methylenchlorid/Pentan-Gemisch (1:1) umkristallisiert.
¹⁹F-NMR CDCl₃: -137.4 ppm (m, 2F, 3,3'-F), -138.8 ppm (m, 2F, 6,6'-F), -160.4 ppm (m, 2F, 4,4'-F), -161.3 ppm (m, 2F, 5,5'-F)

### Beispiel 4: Synthese von Triphenylcarbenium -tris(2,2'-octafluorobiphenyl)phosphat

5.93 g (12 mmol) 2,2'-Dibrom-octafluoro-biphenyl werden in 30 ml Diethylether vorgelegt und bei -78°C gerührt. Anschließend werden 9,6 ml n-Butyllithium (2,5 M in Hexan) zugetropft und die Suspension wird 2 Stunden bei -78°C gerührt. Danach werden 0.83g PCl₅, gelöst in 10 ml Et₂O, zugetropft und die Suspension wird auf Raumtemperatur erwärmt. Das Lösemittel wird im Vakuum abgezogen und der verbleibende Rückstand mit 100 ml Pentan ausgerührt. Anschließend werden 1.10 g Triphenylchlormethan portionsweise zugegeben und 10 Stunden nachgerührt. Der erhaltene Feststoff wird filtriert und mit 70 ml Methylenchlorid extrahiert. Das erhaltene Filtrat wird im Vakuum eingeengt und der resultierende Feststoff aus einem Methylenchlorid/Pentan-Gemisch (1:1) umkristallisiert.
¹⁹F-NMR CDCl₃: -133.9 ppm (m, 2F, 3,3'-F), -134.4 ppm (m, 2F, 6,6'-F), -157.4 ppm (m, 2F, 4,4'-F), -158.5 ppm (m, 2F, 5,5'-F)

### Beispiel 5: Synthese von N,N-Dimethylanilinium-tris(2,2'-octafluorobiphenyl)phosphat

5.93 g (12 mmol) 2,2'-Dibrom-octafluoro-biphenyl werden in 30 ml Diethylether vorgelegt und bei -78°C gerührt. Anschließend werden 9,6 ml n-Butyllithium (2,5 M in Hexan) zugetropft und die Suspension wird 2 Stunden bei -78°C gerührt. Danach werden 0.83g PCl₅, gelöst in 10 ml Et₂O, zugetropft und die Suspension wird auf Raumtemperatur erwärmt. Das Lösemittel wird im Vakuum abgezogen und der verbleibende Rückstand mit 100 ml Pentan ausgerührt. Anschließend werden 0.63 g N,N Dimethylaniliniumchlorid portionsweise zugegeben und 5 Stunden nachgerührt. Der erhaltene Feststoff wird filtriert und mit 70 ml Methylenchlorid extrahiert. Das erhaltene Filtrat wird im Vakuum eingeengt und der resultierende Feststoff aus einem Methylenchlorid/Pentan-Gemisch (1:1) umkristallisiert.
¹⁹F-NMR CDCl₃: -133.1 ppm (m, 2F, 3,3'-F), -133,6 ppm (m, 2F, 6,6'-F), -157.0 ppm (m, 2F, 4,4'-F), -158.1 ppm (m, 2F, 5,5'-F)

Beispiel 6: Inertisierung des Trägermaterials
3g SiO2 (XPO 2407, getrocknet bei 140°C und 10 mbar) werden in 20 ml Heptan suspendiert und langsam mit 26ml TIBA (20%ig in Varsol) versetzt. Es wird 1 Stunden bei Raumtemperatur gerührt und filtriert anschließend das Lösemittel ab. Danach wird der Rückstand mit 2 x 40 ml Pentan gewaschen und dann im Ölpumpemvakuum bei Raumtemperatur getrocknet. Es resultieren 3.3g eines inertisierten Trägermaterials.

### Beispiel 7: Herstellung des geträgerten Katalysatorsystems 1

Zu 5,9 mg Dimethylsilandiylbis(2-methyl-4-phenyl-indenyl)zirkoniumdimethyl in 2 ml Toluol werden 7,3 mg N,N-Dimethylanilinium-bis(2,2'-octafluorobiphenyl)borat gegeben und 15 Minuten gerührt. Die entstandene rote Lösung wird langsam zu 1g inertisiertem SiO₂ (aus Beispiel 6), in 20 ml Toluol suspendiert, gegeben. Es wird eine 1 Stunde bei Raumtemperatur gerührt und anschließend wird das Lösemittel im Ölpumpenvakuum abgezogen. Es wird bis zur Gewichtskonstanz getrocknet.

### Beispiel 8: Herstellung des geträgerten Katalysatorsystems 2

6.1 mg Dimethylsilandiylbis(2-methyl-4-phenyl-indenyl)zirkoniumdichlorid in 2 ml Toluol werden mit 0.015 ml Trimethylaluminium (2M in Toluol) 30 Minuten gerührt und danach mit 7,3 mg N,N-Dimethylanilinium-bis(2,2'-octafluorobiphenyl)borat versetzt. Die entstandene rote Lösung wird langsam zu 1g inertisiertem SiO₂ (aus Beispiel 6), in 20 ml Toluol suspendiert, gegeben. Es wird eine 1 Stunde bei Raumtemperatur gerührt und anschließend wird das Lösemittel im Ölpumpenvakuum abgezogen. Es wird bis zur Gewichtskonstanz getrocknet.

### Beispiel 9: Herstellung des geträgerten Katalysatorsystems 3

8,5 mg Dimethylsilandiylbis(2-methyl-4-phenyl-indenyl)zirkoniumdichlorid in 2 ml Toluol werden mit 2,8 ml Triisobutylaluminium (1M in Toluol) und 10 mg N,N-Dimethylanililriium-bis(2,2'-octafluorobiphenyl)borat versetzt und danach 20 Minuten gerührt. Die entstandene Lösung wird langsam zu 1g inertisiertem SiO₂ (aus Beispiel 6), in 20 ml Toluol suspendiert, gegeben. Es wird eine 1 Stunde bei 70°C gerührt und anschließend wird das Lösemittel im Ölpumpenvakuum abgezogen. Es wird bis zur Gewichtskonstanz getrocknet.

### Beispiel 10: Herstellung des geträgerten Katalysatorsystems 4

Zu 5,9 mg Dimethylsilandiylbis(2-methyl-4-phenyl-indenyl)zirkoniumdimethyl in 2 ml Toluol werden 10.4 mg N,N-Dimethylanilinium-tris(2,2'-octafluorobiphenyl)phosphat gegeben und 15 Minuten gerührt. Die entstandene rote Lösung wird langsam zu 1g inertisiertem SiO₂ (aus Beispiel 6), in 20 ml Toluol suspendiert, gegeben. Es wird eine 1 Stunde bei Raumtemperatur gerührt und anschließend wird das Lösemittel im Ölpumpenvakuum abgezogen. Es wird bis zur Gewichtskonstanz getrocknet.

### Polymerisation:

### Beispiel 11: Polymerisation mit dem Katalysatorsystem 1

Ein trockener 2I-Reaktor wird zunächst mit Stickstoff und anschließend mit Propylen gespült und mit 1,5 I flüssigem Propylen befüllt. Dazu werden 3 ml TIBA (20% ig in Varsol) zugegeben und 15 Minuten gerührt. Anschließend wird der im Beispiel 7 hergestellte Kontakt in 20 ml Heptan resuspendiert eingespritzt und mit 15ml Heptan nachgespült. Das Reaktionsgemisch wird auf die Polymerisationstemperatur von 60°C aufgeheizt und 1 Stunde polymerisiert. Gestoppt wird die Polymerisation durch Abgasen des restlichen Propylens. Das Polymer wird im Vakuumtrockenschrank getrocknet. Es resultieren 214 g Polypropylen-Pulver. Der Reaktor zeigte keine Beläge an der Innenwand oder Rührer. Die Katalysatoraktivität beträgt 37 kg PP/g Metallocen x h.

### Beispiel 12: Polymerisation mit dem Katalysatorsystem 2

Ein trockener 2I-Reaktor wird zunächst mit Stickstoff und anschließend mit Propylen gespült und mit 1,5 I flüssigem Propylen befüllt. Dazu werden 3 ml TIBA (20% ig in Varsol) zugegeben und 15 Minuten gerührt. Anschließend wird der im Beispiel 8 hergestellte Kontakt in 20 ml Heptan resuspendiert eingespritzt und mit 15ml Heptan nachgespült. Das Reaktionsgemisch wird auf die Polymerisationstemperatur von 60°C aufgeheizt und 1 Stunde polymerisiert. Gestoppt wird die Polymerisation durch Abgasen des restlichen Propylens. Das Polymer wird im Vakuumtrockenschrank getrocknet. Es resultieren 290 g Polypropylen-Pulver. Der Reaktor zeigte keine Beläge an der Innenwand oder Rührer. Die Katalysatoraktivität beträgt 48 kg PP/g Metallocen x h.

### Beispiel 13: Polymerisation mit dem Katalysatorsystem 3

Ein trockener 2I-Reaktor wird zunächst mit Stickstoff und anschließend mit Propylen gespült und mit 1,5 I flüssigem Propylen befüllt. Dazu werden 3 ml TIBA (20% ig in Varsol) zugegeben und 15 Minuten gerührt. Anschließend wird der im Beispiel 9 hergestellte Kontakt in 20 ml Heptan resuspendiert eingespritzt und mit 15ml Heptan nachgespült. Das Reaktionsgemisch wird auf die Polymerisationstemperatur von 60°C aufgeheizt und 1 Stunde potymerisiert. Gestoppt wird die Polymerisation durch Abgasen des restlichen Propylens. Das Polymer wird im Vakuumtrockenschrank getrocknet. Es resultieren 354 g Polypropylen-Pulver. Der Reaktor zeigte keine Beläge an der Innenwand oder Rührer. Die Katalysatoraktivität beträgt 42 kg PP/g Metallocen x h.

### Beispiel 14: Polymerisation mit dem Katalysatorsystem 1

Ein trockener 21-Reaktor wird zunächst mit Stickstoff und anschließend mit Propylen gespült und mit 1,5 l flüssigem Propylen befüllt. Dazu werden 3 ml TIBA (20% ig in Varsol) zugegeben und 15 Minuten gerührt. Anschließend wird der im Beispiel 10 hergestellte Kontakt in 20 ml Heptan resuspendiert eingespritzt und mit 15ml Heptan nachgespült. Das Reaktionsgemisch wird auf die Polymerisationstemperatur von 60°C aufgeheizt und 1 Stunde polymerisiert. Gestoppt wird die Polymerisation durch Abgasen des restlichen Propylens. Das Polymer wird im Vakuumtrockenschrank getrocknet. Es resultieren 180 g Polypropylen-Pulver. Der Reaktor zeigte keine Beläge an der Innenwand oder Rührer. Die Katalysatoraktivität beträgt 31 kg PP/g Metallocen x h.

## Patentansprüche

1. Katalysatorsystem enthaltend
a) mindestens einen Träger,
b) mindestens ein Metallocen
c) mindestens eine Verbindung der Formel (I) 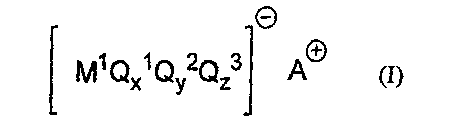
worin
M¹ ein Element der Gruppen IIa, IIIa, Iva oder Va des Periodensystems der Elemente ist,
x gleich 0 oder 1 ist,
y gleich 0 oder 1 ist,
z gleich 0 oder 1 ist,
A ein Kation der Gruppe Ia, IIa, IIIa des Periodensystems der Elemente, ein Carbenium-, Oxonium-, Phosphonium oder Sulfonium-Kation oder eine quatäre Ammonium-Verbindung ist,
Q¹, Q², Q³ ein Liganden-System, das ausgehend von einem Biphenyl-Grundgerüst über die Positionen 2 und 12 an M¹ gebunden ist, bedeutet und der allgemeinen Formel (II), worin 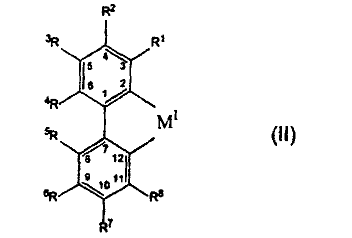
R¹, R², R³, R⁴, R⁵, R⁶, R⁷ und R⁸ gleich oder verschieden sind und ein Wasserstoffatom, ein Halogenatom, eine C₁-C₄₀-kohlenstoffhaltige Gruppe oder eine OSiR₃⁹-Gruppe sind, worin R⁹ gleich oder verschieden sind ein Wasserstoffatom, ein Halogenatom, eine C₁-C₄₀-kohlenstoffhaltige Gruppe sind und gegebenenfalls zwei oder mehrere Reste R¹ bis R⁸ so miteinander verbunden sind, daß sie ein mono- oder polycyclisches Ringsystem bilden, welches gegebenenfalls substituiert sein kann.

2. Katalysatorsystem nach Anspruch 1, **dadurch gekennzeichnet, daß** in Formel (II) R¹, R², R³, R⁴, R⁵, R⁶, R⁷ und R⁸ gleich oder verschieden sind und C₁-C₂₀-Alkyl, C₁-C₂₀-Halogenalkyl, C₁-C₁₀-Alkoxy, C₆-C₄₀-Aryl, C₆-C₄₀-Halogenaryl, C₆-C₄₀-Aryloxy, C₇-C₄₀-Arylalkyl, C₇-C₄₀-Halogenarylalkyl, C₇-C₄₀-Halogenalkylaryl, oder eine OSiR₃⁹-Gruppe sind, worin R⁹ gleich oder verschieden sind und C₁-C₂₀-Alkyl, C₁-C₂₀-Halogenalkyl, C₁-C₁₀-Alkoxy, C₆-C₄₀-Aryl, C₆-C₄₀-Halogenaryl, C₆-C₄₀-Aryloxy, C₇-C₄₀-Arylalkyl, C₇-C₄₀-Halogenarylalkyl oder C₇-C₄₀-Halogenalkylaryl, bedeuten.

3. Katalysatorsystem nach Anspruch 1 oder 2, **dadurch gekennzeichnet, daß** in Formel (I) M¹ gleich Bor und z die ganze Zahl null ist.

4. Katalysatorsystem nach Anspruch 1 oder 2, **dadurch gekennzeichnet, daß** in Formel (II) M¹ gleich Phosphor ist.

5. Katalysatorsystem nach Anspruch 1 oder 2, **dadurch gekennzeichnet, daß** die Formel (I) für folgende Verbindungen steht

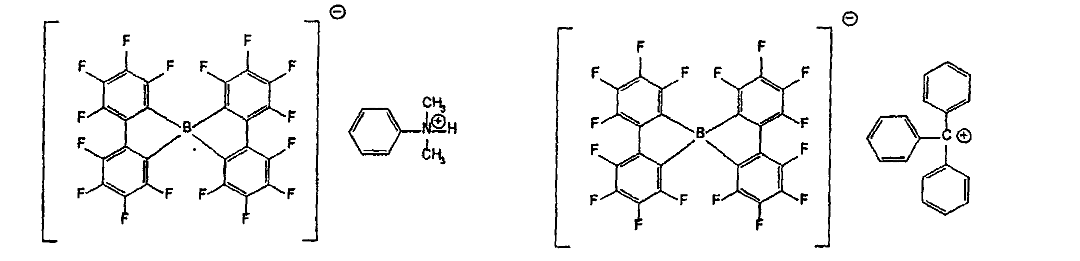

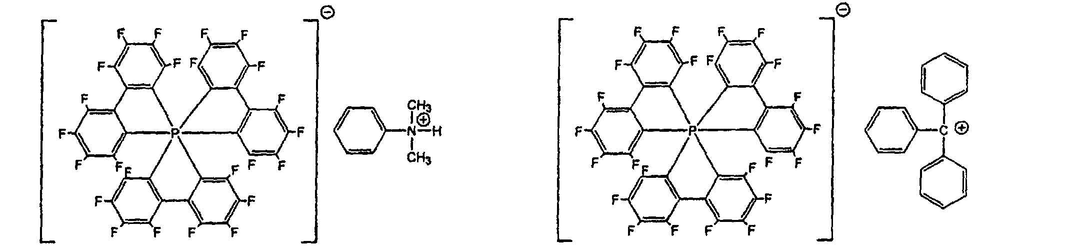

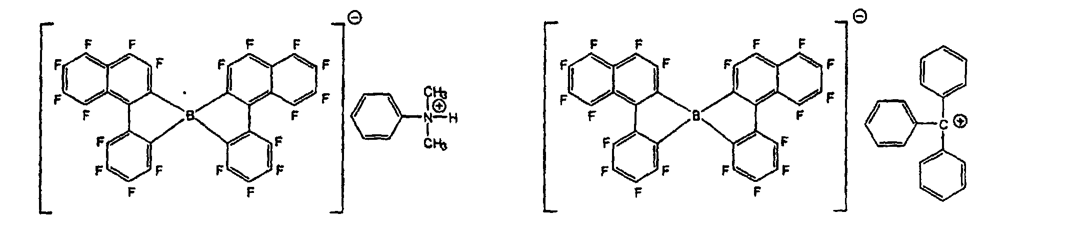

6. Katalysatorsystem nach einem der Ansprüche 1 bis 5, **dadurch gekennzeichnet, daß** als Metallocen eine Verbindung der Formel (V) 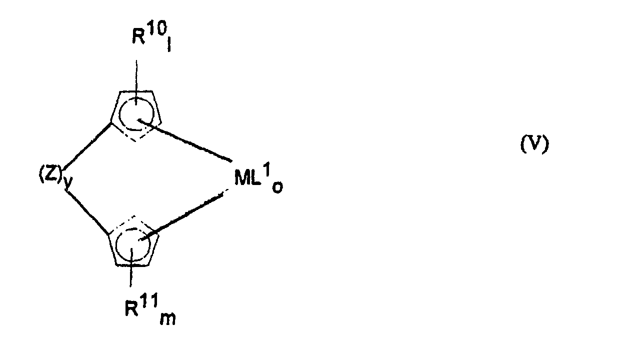 worin
M ein Metall der III., IV., V. oder VI. Nebengruppe des Periodensystems der Elemente ist, insbesondere Ti, Zr oder Hf,
R¹⁰ gleich oder verschieden sind und ein Wasserstoffatom oder SiR₃¹²sind, worin R¹² gleich oder verschieden ein Wasserstoffatom oder eine C₁-C₄₀-kohlenstoffhaltige Gruppe, oder R¹⁰ eine C₁-C₃₀ - kohlenstoffhaltige Gruppe, ist, oder zwei oder mehrere Reste R¹⁰ können so miteinander verbunden sein, daß die Reste R¹⁰ und die sie verbindenden Atome des Cyclopentadienylringes ein C₄-C₂₄-Ringsystem bilden, welches seinerseits substituiert sein kann,
R¹¹ gleich oder verschieden sind und ein Wasserstoffatom oder SiR₃¹² sind, worin R¹² gleich oder verschieden ein Wasserstoffatom oder eine C₁-C₄₀-kohlenstoffhaltige Gruppe oder R¹¹ eine C₁-C₃₀ - kohlenstoffhaltige Gruppe ist, oder zwei oder mehrere Reste R¹¹ können so miteinander verbunden sein, daß die Reste R¹¹ und die sie verbindenden Atome des Cyclopentadienylringes ein C₄-C₂₄-Ringsystem bilden, welches seinerseits substituiert sein kann,
l gleich 5 für v = 0, und I gleich 4 für v = 1 ist,
m gleich 5 für v = 0, und m gleich 4 für v = 1 ist,
L¹ gleich oder verschieden sein können und ein Wasserstoffatom, eine C₁-C₁₀-Kohlenwasserstoffgruppe, ein Halogenatom, oder OR¹⁶, SR¹⁶, OSiR₃¹⁶, SiR₃¹⁶, PR₂¹⁶ oder NR₂¹⁶bedeuten, worin R¹⁶ ein Halogenatom, eine C₁-C₁₀ Alkylgruppe, eine halogenierte C₁-C₁₀ Alkylgruppe, eine C₆-C₂₀ Arylgruppe oder eine halogenierte C₆-C₂₀ Arylgruppe sind, oder L¹ sind eine Toluolsulfonyl-, Trifluoracetyl-, Trifluoracetoxyl-, Trifluormethansulfonyl-, Nonafluorbutansulfonyl- oder 2,2,2-Trifluorethansulfonyl-Gruppe,
o eine ganze Zahl von 1 bis 4, bevorzugt 2 ist,
Z ein verbrückendes Strukturelement zwischen den beiden Cyclopentadienylringen bezeichnet und v ist 0 oder 1, eingesetzt wird.

7. Katalysatorsystem nach Anspruch 6, **dadurch gekennzeichnet, daß** in Formel (V) Z für M²R¹³R¹⁴ steht, wobei M² Kohlenstoff, Silizium, Germanium oder Zinn, R¹³ und R¹⁴ gleich oder verschieden eine C₁-C₂₀-kohlenwasserstoffhaltige Gruppe oder Trimethylsilyl bedeutet.

8. Katalysatorsystem nach Anspruch 6, **dadurch gekennzeichnet, daß** in Formel (V) Z gleich CH₂, CH₂CH₂, CH(CH₃)CH₂, CH(C₄H₉)C(CH₃)₂, C(CH₃)₂, (CH₃)₂Si, (CH₃)₂Ge, (CH₃)₂Sn, (C₆H₅)₂Si, (C₆H₅)(CH₃)Si, (C₆H₅)₂Ge, (C₆H₅)₂Sn, (CH₂)₄Si, CH₂Si(CH₃)₂, o-C₆H₄ oder 2,2'-(C₆H₄)₂ ist.

9. Katalysatorsystem nach Anspruch 6, **dadurch gekennzeichnet**, als Metallocen der Formel (V) die Verbindungen
Dimethylsilandiylbis(indenyl)zirkoniumdichlorid
Dimethylsilandiylbis(4-naphthyl-indenyl)zirkoniumdichlorid
Dimethylsilandiylbis(2-methyl-benzo-indenyl)zirkoniumdichlorid
Dimethylsilandiylbis(2-methyl-indenyl)zirkoniumdichlorid
Dimethylsilandiylbis(2-methyl-4-(1-naphthyl)-indenyl)zirkoniumdichlorid
Dimethylsilandiylbis(2-methyl-4-(2-naphthyl)-indenyl)zirkoniumdichlorid
Dimethylsilandiylbis(2-methyl-4-phenyl-indenyl)zirkoniumdichlorid
Dimethylsilandiylbis(2-methyl-4-t-butyl-indenyl)zirkoniumdichlorid
Dimethylsilandiylbis(2-methyl-4-isopropyl-indenyl)zirkoniumdichlorid
Dimethylsilandiylbis(2-methyl-4-ethyl-indenyl)zirkoniumdichlorid
Dimethylsilandiylbis(2-methyl-4- -acenaphth-indenyl)zirkoniumdichlorid
Dimethylsilandiylbis(2,4-dimethyl-indenyl)zirkoniumdichlorid
Dimethylsilandiylbis(2-ethyl-indenyl)zirkoniumdichlorid
Dimethylsilandiylbis(2-ethyl-4-ethyl-indenyl)zirkoniumdichlorid
Dimethylsilandiylbis(2-ethyl-4-phenyl-indenyl)zirkoniumdichlorid
Dimethylsilandiybis(2-methyl-4,5-benzo-indenyl)zirkoniumdichlorid
Dimethylsilandiylbis(2-methyl-4,6 diisopropyl-indenyl)zirkoniumdichlorid
Dimethylsilandiylbis(2-methyl-4,5 diisopropyl-indenyl)zirkoniumdichlorid
Dimethylsilandiylbis(2,4,6-trimethyl-indenyl)zirkoniumdichlorid
Dimethylsilandiylbis(2,5,6-trimethyl-indenyl)zirkoniumdichlorid
Dimethylsilandiylbis(2,4,7-trimethyf-indenyl)zirkoniumdichlorid
Dimethylsilandiylbis(2-methyl-5-isobutyl-indenyl)zirkoniumdichlorid
Dimethylsitandiylbis(2-methyl-5-t-butyl-indenyl)zirkoniumdichlorid
Methyl(phenyl)silandiylbis(2-methyl-4-phenyl-indenyl)zirkoniumdichlorid
Methyl(phenyl)silandiylbis(2-methyl-4,6 diisopropyl-indenyl)zirkoniumdichlorid
Methyl(phenyl)silandiylbis(2-methyl-4-isopropyl-indenyl)zirkoniumdichlorid
Methyl(phenyl)silandiylbis(2-methyl-4,5-benzo-indenyl)zirkoniumdichlorid
Methyl(phenyl)silandiylbis(2-methyl-4,5-(methylbenzo)-indenyl)zirkoniumdi-chlorid
Methyl(phenyl)silandiylbis(2-methyl-4,5-(tetramethylbenzo)-indenyl)zirkoniumdichlorid
Methyl(phenyl)silandiylbis(2-methyl-4- -acenaphth-indenyl)zirkoniumdichlorid
Methyl(phenyl)silandiylbis(2-methyl-indenyl)zirkoniumdichlorid
Methyl(phenyl)silandiylbis(2-methyl-5-isobutyl-indenyl)zirkoniumdichlorid
1,2-Ethandiylbis(2-methyl-4-phenyl-indenyl)zirkoniumdichlorid
1,4-Butandiylbis(2-methyl-4-phenyl-indenyl)zirkoniumdichlorid
1,2-Ethandiylbis(2-methyl-4,6 diisopropyl-indenyl)zirkoniumdichlorid
1,4-Butandiylbis(2-methyl-4-isopropyl-indenyl)zirkoniumdichlorid
1,4-Butandiylbis(2-methyl-4,5-benzo-indenyl)zirkoniumdichlorid
1,2-Ethandiylbis(2-methyl-4,5-benzo-indenyl)zirkoniumdichlorid
1,2-Ethandiylbis(2,4,7-trimethyl-indenyl)zirkoniumdichlorid
1,2-Ethandiylbis(2-methyl-indenyl)zirkoniumdichlorid
1,4-Butandiylbis(2-methyl-indenyl)zirkoniumdichlorid
[4-(η⁵-Cyclopentadienyl)-4,6,6-trimethyl-(η⁵-4,5-tetrahydropentalen)]-dichlorozirconium
[4-(η⁵-3'-Trimethylsilyl-cyclopentadienyl)-4,6,6-trimethyl-(η⁵-4,5-tetrahydropentalen)]-dichlorozirconium
[4-(η⁵-3'-Isopropyl-cyclopentadienyl)-4,6,6-trimethyl-(η⁵-4,5-tetrahydropentalen)]-dichlorozirconium
[4-(η⁵-Cyclopentadienyl)-4,7,7-trimethyl-(η⁵-4,5,6,7-tetrahydroindenyl)]-dichlorotitan
[4-(η⁵-Cyclopentadienyl)-4,7,7-trimethyl-(η⁵-4,5,6,7-tetrahydroindenyl)]-dichlorozirkonium
[4-(η⁵-Cyclopentadienyl)-4,7,7-trimethyl-(η⁵-4,5,6,7-tetrahydroindenyl)]-dichlorohafnium
[4-(η⁵-3'-tert.Butyl-cyclopentadienyl)-4,7,7-trimethyl-(η⁵-4,5,6,7-tetrahydroindenyl)]-dichlorotitan
4-(η⁵-3'-Isopropylcyclopentadienyl)-4,7,7-trimethyl-(η⁵-4,5,6,7-tetrahydroindenyl)]-dichlorotitan
4-(η⁵-3'-Methylcyclopentadienyl)-4,7,7-trimethyl-(η⁵-4,5,6,7-tetrahydroindenyl)]-dichlorotitan
4-(η⁵-3'-Trimethylsilyl-cyclopentadienyl)-2-trimethylsilyl-4,7,7-trimethyl-(η⁵-4,5,6,7-tetrahydroindenyl)]-dichlorotitan
4-(η⁵-3'-tert.Butyl-cyclopentadienyl)-4,7,7-trimethyl-(η⁵-4,5,6,7-tetrahydroindenyl)]-dichlorozirkonium
(Tertbutylamido)-(tetramethyl-η⁵-cyclopentadienyl)-dimethylsilyl-dichlorotitan
(Tertbutylamido)-(tetramethyl-η⁵-cyclopentadienyl)-1,2-ethandiyl-dichlorotitandichlorotitan
(Methylamido)-(tetramethyl-η⁵-cyclopentadienyl)-dimethylsilyl-dichlorotitan
(Methylamido)-(tetramethyl-η⁵-cyclopentadienyl)-1,2-ethandiyl-dichlorotitan (Tertbutylamido)-(2,4-dimethyl-2,4-pentadien-1-yl)-dimethylsilyl-dichlorotitan
Bis-(cyclopentadienyl)-zirkoniumdichlorid
Bis-(n-butylcyclopentadienyl)-zirkoniumdichlorid
Bis-(1,3-dimethylcyclopentadienyl)-zirkoniumdichlorid
Tetrachloro-[1-[bis(η⁵-1H-inden-1-yliden)methylsilyl]-3-η⁵-cyclopenta-2,4-dien-1-yliden)-3-η⁵-9H-fluoren-9-yliden)butan]di-zirkonium
Tetrachloro-[2-[bis(η⁵-2-methyl-1H-inden-1-yliden)methoxysilyl]-5-(η⁵-2,3,4,5-tetramethylcyclopenta-2,4-dien-1-yliden)-5-(η⁵-9H-fluoren-9-yliden)hexan]dizirkonium
Tetrachloro-[1-[bis(η⁵-1H-inden-1-yliden)methylsilyl]-6-(η⁵-cyclopenta-2,4-dien-1-yliden)-6-(η⁵-9H-fluoren-9-yliden)-3-oxaheptan]di-zirkonium
Dimethylsilandiylbis(2-methyl-4-(tert-butyl-phenyl-indenyl)-zirkoniumdichlorid
Dimethylsilandiylbis(2-methyl-4-(4-methyl-phenyl-indenyl)zirkoniumdichlorid
Dimethylsilandiylbis(2-methyl-4-(4-ethyl-phenyl-indenyl)zirkoniumdichlorid
Dimethylsilandiylbis(2-methyl-4-(4-trifluormethyl-phenyl-indenyl)zirkoniumdichlorid
Dimethylsilandiylbis(2-methyl-4-(4-methoxy-phenyl-indenyl)zirkoniumdichlorid
Dimethylsilandiylbis(2-ethyl-4-(4-tert-butyl-phenyl-indenyl)zirkoniumdichlorid
Dimethylsilandiylbis(2-ethyl-4-(4-methyl-phenyl-indenyl)zirkoniumdichlorid
Dimethylsilandiylbis(2-ethyl-4-(4-ethyl-phenyl-indenyl)zirkoniumdichlorid
Dimethylsilandiylbis(2-ethyl-4-(4-trifluormethyl-phenyl-indenyl)zirkoniumdichlorid
Dimethylsilandiylbis(2-ethyl-4-(4-methoxy-phenyl-indenyl)zirkoniumdichlorid
Dimethylsilandiylbis(2-methyl-4-(4-tert-butyl-phenyl-indenyl)zirkoniumdimethyl
Dimethylsilandiylbis(2-methyl-4-(4-methyl-phenyl-indenyl)zirkoniumdimethyl
Dimethylsilandiylbis(2-methyl-4-(4-ethyl-phenyl-indenyl)zirkoniumdimethyl
Dimethylsilandiylbis(2-methyl-4-(4-trifluormethyl-phenyl-indenyl)zirkoniumdimethyl
Dimethylsilandiylbis(2-methyl-4-(4-methoxy-phenyl-indenyl)zirkoniumdimethyl
Dimethylsilandiylbis(2-ethyl-4-(4-tert-butyl-phenyl-indenyl)zirkoniumdimethyl
Dimethylsilandiylbis(2-ethyl-4-(4-methyl-phenyl-indenyl)zirkoniumdimethyl
Dimethylsilandiylbis(2-ethyl-4-(4-ethyl-phenyl-indenyl)zirkoniumdiethyl
Dimethylsilandiylbis(2-ethyl-4-(4-trifluormethyl-phenyl-indenyl)zirkoniumdimethyl
Dimethylsilandiylbis(2-ethyl-4-(4-methoxy-phenyl-indenyl)zirkoniumdimethyl eingesetzt werden

10. Katalysatorsystem nach einem der Ansprüche 1 bis 10, **dadurch gekennzeichnet, daß** als Träger anorganische Oxide, insbesondere Siliziumoxid, Aluminiumoxid, Zeolithe, MgO, ZrO₂, TiO₂, B₂O₃, CaO, ZnO, ThO₂, Na₂CO₃, K₂CO₃, CaCO₃, MgCO₃, Na₂SO₄, Al₂(SO₄)₃, BaSO₄, KNO₃, Mg(NO₃)₂, Al(NO₃)₃ ,Na₂O, K₂O, oder Li₂O, oder mindestens ein Polymer verwendet wird.

11. Verfahren zur Herstellung eines Polyolefins durch Polymerisation eines oder mehrerer Olefine in Gegenwart eines Katalysatorsystems nach einem der Ansprüche 1 bis 11.

12. Verwendung eines Katalysatorsystems nach einem der Ansprüche 1 bis 11 zur Herstellung von Polyolefinen.

## Claims

1. A catalyst system comprising
a) at least one support,
b) at least one metallocene
c) at least one compound of the formula (I) 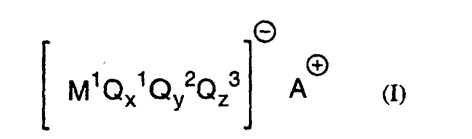
where
M¹ is an element of group IIa, IIIa, IVa or Va of the Periodic Table of the Elements,
x is 0 or 1,
y is 0 or 1,
z is 0 or 1,
A is a cation of group Ia, IIa, IIIa of the Periodic Table of the Elements, a carbenium, oxonium, phosphonium or sulfonium cation or a quaternary ammonium compound,
Q¹, Q², Q³ are each a ligand system based on a biphenyl framework bound to M¹ via the positions 2 and 12 and having the formula (II) 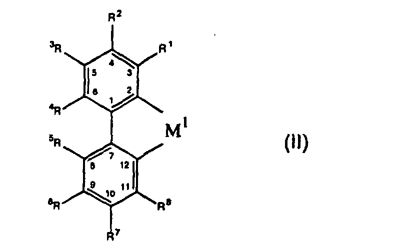 where
R¹, R², R³, R⁴, R⁵, R⁶, R⁷ and R⁸ are identical or different and are each a hydrogen atom, a halogen atom, a C₁-C₄₀ group, or an OSiR₃⁹ group, where R⁹ are identical or different and are each a hydrogen atom, a halogen atom, a C₁-C₄₀ group and two or more radicals R¹ to R⁸ may be joined to one another so as to form a monocyclic or polycyclic ring system which may be substituted.

2. A catalyst system as claimed in claim 1, wherein, in formula (II), R¹, R², R³, R⁴, R⁵, R⁶, R⁷ and R⁸ are identical or different and are each C₁-C₂₀-alkyl, C₁-C₂₀-haloalkyl, C₁-C₁₀-alkoxy, C₆-C₄₀-aryl, C₆-C₄₀-haloaryl, C₆-C₄₀-aryloxy, C₇-C₄₀-arylalkyl, C₇-C₄₀-haloarylalkyl, C₇-C₄₀-haloalkylaryl or an OSiR₃⁹ group, where R⁹ are identical or different and are each C₁-C₂₀-alkyl, C₁-C₂₀-haloalkyl, C₁-C₁₀-alkoxy, C₆-C₄₀-aryl, C₆-C₄₀-haloaryl, C₆-C₄₀-aryloxy, C₇-C₄₀-arylalkyl, C₇-C₄₀-haloarylalkyl or C₇-C₄₀-haloalkylaryl.

3. A catalyst system as claimed in claim 1 or 2, wherein, in formula (I), M¹ is boron and z is zero.

4. A catalyst system as claimed in claim 1 or 2, wherein, in formula (II), M¹ is phosphorus.

5. A catalyst system as claimed in claim 1 or 2, wherein the formula (I) represents one of the following compounds:

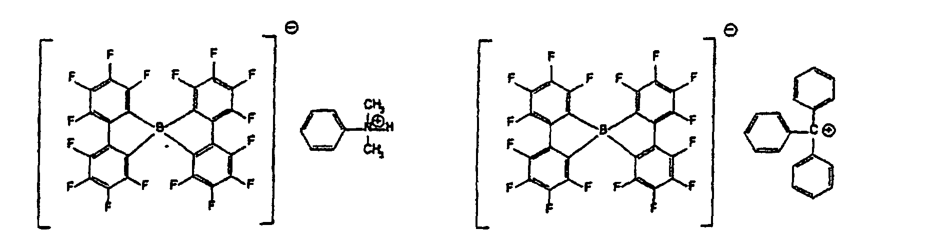

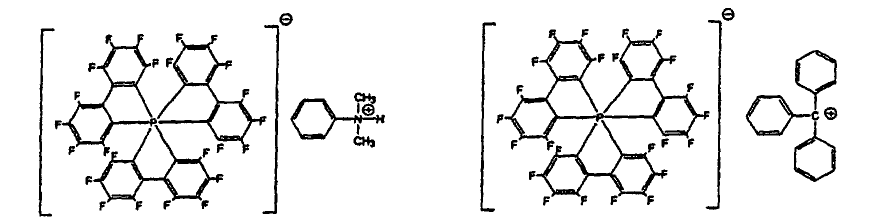

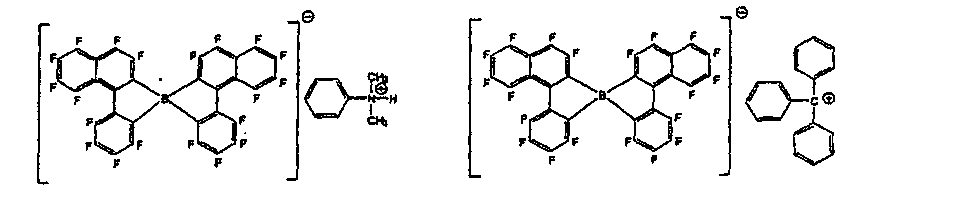

6. A catalyst system as claimed in any of claims 1 to 5, wherein the metallocene used is a compound of the formula (V) 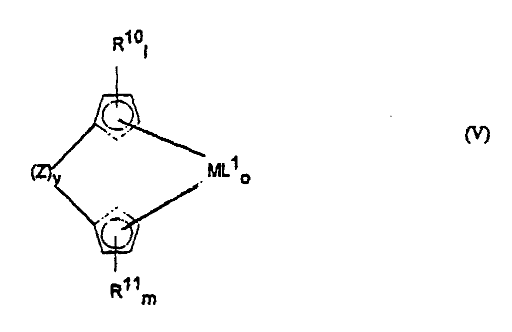 where
M is a metal of transition group III, IV, V or VI of the Periodic Table of the Elements, in particular Ti, Zr or Hf,
R¹⁰ are identical or different and are each a hydrogen atom or SiR₃¹², where R¹² are identical or different and are each a hydrogen atom or a C₁-C₄₀ group, or R¹⁰ is a C₁-C₃₀ group or two or more radicals R¹⁰ may be joined to one another in such a way that the radicals R¹⁰ and the atoms of the cyclopentadienyl ring which connect them form a C₄-C₂₄ ring system which may in turn be substituted,
R¹¹ are identical or different and are each a hydrogen atom or SiR₃¹², where R¹² are identical or different and are each a hydrogen atom or a C₁-C₄₀ group, or R¹¹ is a C₁-C₃₀ group or two or more radicals R¹¹ may be joined to one another in such a way that the radicals R¹¹ and the atoms of the cyclopentadienyl ring which connect them form a C₄-C₂₄ ring system which may in turn be substituted,
l is 5 when v = 0, and 1 is 4 when v = 1,
m is 5 when v = 0, and m is 4 when v = 1,
L¹ may be identical or different and are each a hydrogen atom, a C₁-C₁₀-hydrocarbon group, a halogen atom or OR¹⁶, SR¹⁶, OSiR₃¹⁶, SiR₃¹⁶, PR₂¹⁶ or NR₂¹⁶, where R¹⁶ is a halogen atom, a C₁-C₁₀-alkyl group, a halogenated C₁-C₁₀-alkyl group, a C₆-C₂₀-aryl group or a halogenated C₆-C₂₀-aryl group, or L¹ are each a toluenesulfonyl, trifluoroacetyl, trifluoroacetoxyl, trifluoromethanesulfonyl, nonafluorobutanesulfonyl or 2,2,2-trifluoroethanesulfonyl group,
o is an integer from 1 to 4, preferably 2,
Z is a bridging structural element between the two cyclopentadienyl rings and v is 0 or 1.

7. A catalyst system as claimed in claim 6, wherein Z in formula (V) is M²R¹³R¹⁴, where M² is carbon, silicon, germanium or tin, R¹³ and R¹⁴ are identical or different and are each a C₁-C₂₀-hydrocarbon-containing group or trimethylsilyl.

8. A catalyst system as claimed in claim 6, wherein Z in formula (V) is CH₂, CH₂CH₂, CH(CH₃)CH₂, CH(C₄H₉)C(CH₃)₂, C(CH₃)₂, (CH₃)₂Si, (CH₃)₂Ge, (CH₃)₂Sn, (C₆H₅)₂Si, (C₆H₅) (CH₃)Si, (C₆H₅)₂Ge, (C₆H₅)₂Sn, (CH₂)₄Si, CH₂Si(CH₃)₂, o-C₆H₄ or 2,2'-(C₆H₄)₂.

9. A catalyst system as claimed in claim 6, wherein the metallocene of the formula (V) which is used is one of the compounds
dimethylsilanediylbis(indenyl)zirconium dichloride
dimethylsilanediylbis(4-naphthylindenyl)zirconium dichloride
dimethylsilanediylbis(2-methylbenzoindenyl)-zirconium dichloride
dimethylsilanediylbis(2-methylindenyl)zirconium dichloride
dimethylsilanediylbis(2-methyl-4-(1-naphthyl)-indenyl)zirconium dichloride
dimethylsilanediylbis(2-methyl-4-(2-naphthyl)-indenyl)zirconium dichloride
dimethylsilanediylbis(2-methyl-4-phenylindenyl)-zirconium dichloride
dimethylsilanediylbis(2-methyl-4-t-butylindenyl)-zirconium dichloride
dimethylsilanediylbis(2-methyl-4-isopropyl-indenyl)zirconium dichloride
dimethylsilanediylbis(2-methyl-4-ethylindenyl)-zirconium dichloride
dimethylsilanediylbis(2-methyl-4- -acenaphthindenyl)zirconium dichloride
dimethylsilanediylbis(2,4-dimethylindenyl)-zirconium dichloride
dimethylsilanediylbis(2-ethylindenyl)zirconium dichloride
dimethylsilanediylbis(2-ethyl-4-ethylindenyl)-zirconium dichloride
dimethylsilanediylbis(2-ethyl-4-phenylindenyl)-zirconium dichloride
dimethylsilanediylbis(2-methyl-4,5-benzoindenyl)-zirconium dichloride
dimethylsilanediylbis(2-methyl-4,6-diisopropylindenyl)zirconium dichloride
dimethylsilanediylbis(2-methyl-4,5-diisopropylindenyl)zirconium dichloride
dimethylsilanediylbis(2,4,6-trimethylindenyl)-zirconium dichloride
dimethylsilanediylbis(2,5,6-trimethylindenyl)-zirconium dichloride
dimethylsilanediylbis(2,4,7-trimethylindenyl)-zirconium dichloride
dimethylsilanediylbis(2-methyl-5-isobutylindenyl)-zirconium dichloride
dimethylsilanediylbis(2-methyl-5-t-butylindenyl)-zirconium dichloride
methyl(phenyl)silanediylbis(2-methyl-4-phenyl-indenyl)zirconium dichloride
methyl(phenyl)silanediylbis(2-methyl-4,6-diisopropylindenyl)zirconium dichloride
methyl(phenyl)silanediylbis(2-methyl-4-isopropyl-indenyl)zirconium dichloride
methyl(phenyl)silanediylbis(2-methyl-4,5-benzo-indenyl)zirconium dichloride
methyl(phenyl)silanediylbis(2-methyl-4,5-(methyl-benzo)indenyl)zirconium dichloride
methyl(phenyl)silanediylbis(2-methyl-4,5-(tetramethylbenzo)indenyl)zirconium dichloride
methyl(phenyl)silanediylbis(2-methyl-4-acenaphthindenyl)zirconium dichloride
methyl(phenyl)silanediylbis(2-methylindenyl)-zirconium dichloride
methyl(phenyl)silanediylbis(2-methyl-5-isobutyl-indenyl)zirconium dichloride
1,2-ethanediylbis(2-methyl-4-phenylindenyl)-zirconium dichloride
1,4-butanediylbis(2-methyl-4-phenylindenyl)-zirconium dichloride
1,2-ethanediylbis(2-methyl-4,6 diisopropylindenyl)zirconium dichloride
1,4-butanediylbis(2-methyl-4-isopropylindenyl)-zirconium dichloride
1,4-butanediylbis(2-methyl-4,5-benzoindenyl)-zirconium dichloride
1,2-ethanediylbis(2-methyl-4,5-benzoindenyl)-zirconium dichloride
1,2-ethanediylbis(2,4,7-trimethylindenyl)zirconium dichloride
1,2-ethanediylbis(2-methylindenyl)zirconium dichloride
1,4-butanediylbis(2-methylindenyl)zirconium dichloride
[4- (η⁵-cyclopentadienyl)-4,6,6-trimethyl-(η⁵-4,5-tetrahydropentalene)]dichloro-zirconium
[4-(η⁵-3'-trimethylsilylcyclopentadienyl)-4,6,6-trimethyl-(η⁵-4,5-tetrahydro-pentalene)]-dichlorozirconium
[4-(η⁵-3'-isopropylcyclopentadienyl)-4,6,6-trimethyl-(η⁵-4,5-tetrahydro-pentalene)]-dichlorozirconium
[4- (η⁵-cyclopentadienyl)-4,7,7-trimethyl-(η⁵-4,5,6,7-tetrahydroindenyl)]dichloro-titanium
[4-(η⁵-cyclopentadienyl)-4,7,7-trimethyl-(η⁵-4,5,6,7-tetrahydroindenyl)]dichloro-zirconium
[4-(η⁵-cyclopentadienyl)-4,7,7-trimethyl-(η⁵-4,5,6,7-tetrahydroindenyl)]dichloro-hafnium
[4-(η⁵-3'-tert-butylcyclopentadienyl)-4,7,7-trimethyl-(η⁵-4,5,6,7-tetrahydro-indenyl)]-dichlorotitanium
4-(η⁵-3'-isopropylcyclopentadienyl)-4,7,7-trimethyl-(η⁵-4,5,6,7-tetrahydro-indenyl)]-dichlorotitanium
4-(η⁵-3'-methylcyclopentadienyl)-4,7,7-trimethyl-(η⁵-4,5,6,7-tetrahydroindenyl)]-dichlorotitanium
4-(η⁵-3'-trimethylsilylcyclopentadienyl)-2-trimethylsilyl-4,7,7-trimethyl-(η⁵-4,5,6,7-tetrahydroindenyl)]dichlorotitanium
4-(η⁵-3'-tert-butylcyclopentadienyl)-4,7,7-tri-methyl-(η⁵-4,5,6,7-tetrahydro-indenyl)]dichlorozirconium
(tert-butylamido)-(tetramethyl-η⁵-cyclopentadienyl)dimethylsilyldichlorotitanium
(tert-butylamido)-(tetramethyl-η⁵-cyclopentadienyl)-1,2-ethanediyldichlorotitanium
(methylamido)-(tetramethyl-η⁵-cyclopentadienyl)-dimethylsilyldichlorotitanium
(methylamido)-(tetramethyl-η⁵-cyclopentadienyl)-1,2-ethanediyldichlorotitanium
(tert-butylamido)-(2,4-dimethyl-2,4-pentadien-1-yl)dimethylsilyldichlorotitanium
bis(cyclopentadienyl)zirconium dichloride
bis (n-butylcyclopentadienyl)zirconium dichloride
bis(1,3-dimethylcyclopentadienyl)zirconium dichloride
tetrachloro-[1-[bis(η⁵-1H-inden-1-ylidene)methylsilyl]-3-η⁵-cyclopenta-2,4-dien-1-ylidene)-3-η⁵-9H-fluoren-9-ylidene)butane]dizirconium
tetrachloro-[2-[bis(η⁵-2-methyl-1H-inden-1-ylidene)methoxysilyl]-5-(η⁵-2,3,4,5-tetramethylcyclopenta-2,4-dien-1-ylidene)-5-(η⁵-9H-fluoren-9-ylidene)hexane]-dizirconium
tetrachloro-[1-[bis(η⁵-1H-inden-1-ylidene)methylsilyl]-6-(η⁵-cyclopenta-2,4-dien-1-ylidene)-6-(η⁵-9H-fluoren-9-ylidene)-3-oxaheptane]dizirconium
dimethylsilanediylbis(2-methyl-4-(tert-butylphenylindenyl)zirconium dichloride
dimethylsilanediylbis(2-methyl-4-(4-methylphenylindenyl)zirconium dichloride
dimethylsilanediylbis(2-methyl-4-(4-ethylphenylindenyl)zirconium dichloride
dimethylsilanediylbis(2-methyl-4-(4-trifluoromethylphenylindenyl)zirconium dichloride
dimethylsilanediylbis(2-methyl-4-(4-methoxyphenylindenyl)zirconium dichloride
dimethylsilanediylbis(2-ethyl-4-(4-tert-butylphenylindenyl)zirconium dichloride
dimethylsilanediylbis(2-ethyl-4-(4-methylphenylindenyl)zirconium dichloride
dimethylsilanediylbis(2-ethyl-4-(4-ethylphenylindenyl)zirconium dichloride
dimethylsilanediylbis(2-ethyl-4-(4-trifluoromethylphenylindenyl)zirconium dichloride
dimethylsilanediylbis(2-ethyl-4-(4-methoxyphenylindenyl)zirconium dichloride
dimethylsilanediylbis(2-methyl-4-(4-tert-butylphenylindenyl)dimethylzirconium
dimethylsilanediylbis(2-methyl-4-(4-methylphenylindenyl)dimethylzirconium
dimethylsilanediylbis(2-methyl-4-(4-ethylphenylindenyl)dimethylzirconium
dimethylsilanediylbis(2-methyl-4-(4-trifluoromethylphenylindenyl)dimethylzirconium
dimethylsilanediylbis(2-methyl-4-(4-methoxyphenylindenyl)dimethylzirconium
dimethylsilanediylbis(2-ethyl-4-(4-tert-butylphenylindenyl)dimethylzirconium
dimethylsilanediylbis(2-ethyl-4-(4-methylphenylindenyl)dimethylzirconium
dimethylsilanediylbis(2-ethyl-4-(4-ethylphenylindenyl)zirconium diethyl
dimethylsilanediylbis(2-ethyl-4-(4-trifluoromethylphenylindenyl)dimethylzirconium
dimethylsilanediylbis(2-ethyl-4-(4-methoxyphenylindenyl)dimethylzirconium.

10. A catalyst system as claimed in any of claims 1 to 10, wherein the support used comprises inorganic oxides, in particular silicon oxide, aluminum oxide, zeolites, MgO, ZrO₂, TiO₂, B₂O₃, CaO, ZnO, ThO₂, Na₂CO₃, K₂CO₃, CaCO₃, MgCO₃, Na₂SO₄, Al₂(SO₄)₃, BaSO₄, KNO₃, Mg(NO₃)₂, Al(NO₃)₃ ,Na₂O, K₂O or Li₂O, or at least one polymer.

11. A process for preparing a polyolefin by polymerization of one or more olefins in the presence of a catalyst system as claimed in any of claims 1 to 11.

12. The use of a catalyst system as claimed in any of claims 1 to 11 for preparing polyolefins.

## Revendications

1. Système catalytique contenant :
a) au moins un support
b) au moins un métallocène
c) au moins un composé de formule (I)
[M¹Q_{X}¹Q_{Y}¹Q_{Z}³]⁻ A⁺ (I)
formule dans laquelle:
- M¹ est un élément des groupes IIa, IIIa, IVa ou Va de la Classification périodique des éléments,
- x est égal à 0 ou 1
- y est égal à 0 ou 1
- z est égal à 0 ou 1
- A est un cation des groupes Ia, IIa ou IIIa de la Classification périodique des éléments, un cation carbenium, oxonium, phosphonium ou sulfonium ou un composé d'ammonium quatemaire,
- Q¹, Q² , Q³ représentente un système ligand dérivé d'un résidu de base biphénylique lié en position 2 et 12 à M¹ et présentant la formule (II): 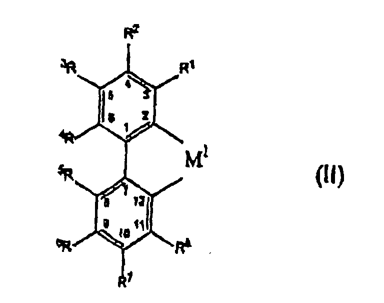
dans laquelle
- les radicaux R¹, R², R³, R⁴, R⁵, R⁶, R⁷ et R⁸ sont identiques ou différents et consistent en un atome d'hydrogène, un atome d'halogène, un radical hydrocarboné en C₁ - C₄₀ ou en un groupe OSiR₃⁹, dans lequel les radicaux R⁹, identiques ou différents, sont des atomes d'hydrogène, des atomes d'halogène ou des radicaux hydrocarbonés en C₁ - C₄₀, et, éventuellement,
- deux ou plusieurs des radicaux R¹ à R⁸ sont liés entre eux de façon à former un noyau polycyclique, lequel peut éventuellement être substitué.

2. Système catalytique selon la revendication 1, **caractérisé en ce que**, dans la formule (II), les radicaux R¹, R², R³, R⁴, R⁵, R⁶, R⁷ et R⁸, identiques ou différents, consistent en les radicaux
C₁-C₂₀ alkyl, C₁-C₂₀ haloalkyl, C₁-C₁₀ alkoxy, C₆-C₄₀ aryl, C₆-C₄₀ haloaryl, C₆-C₄₀ aryloxy,
C₇-C₄₀ arylalkyl, C₇-C₄₀ haloarylalkyl ou C₇-C₄₀ haloalkylaryl ou en un groupe OSiR₃⁹, dans lequel les radicaux R⁹, identiques ou différents, sont des radicaux
C₁-C₂₀ alkyl, C₁-C₂₀ haloalkyl, C₁-C₁₀ alkoxy, C₆-C₄₀ aryl, C₆-C₄₀ haloaryl, C₆-C₄₀ aryloxy,
C₇-C₄₀ arylalkyl, C₇-C₄₀ haloarylalkyl ou C₇-C₄₀ haloalkylaryl.

3. Système catalytique selon la revendication 1 ou 2, **caractérisé en ce que**, dans la formule (I), M¹ est du bore et z est égal à zéro.

4. Système catalytique selon la revendication 1 ou 2, **caractérisé en ce que**, dans la formule (I), M¹ est du phosphore.

5. Système catalytique selon la revendication 1 ou 2, **caractérisé en ce que**, la formule (I) couvre les composés suivants:

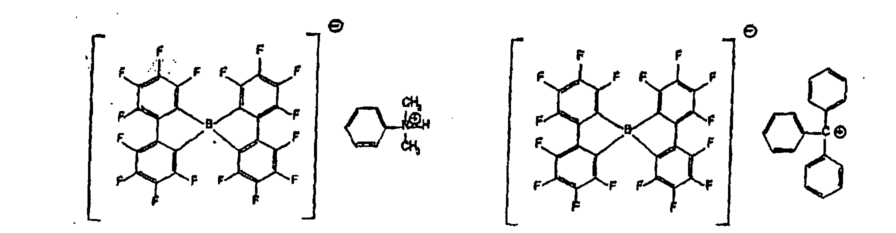

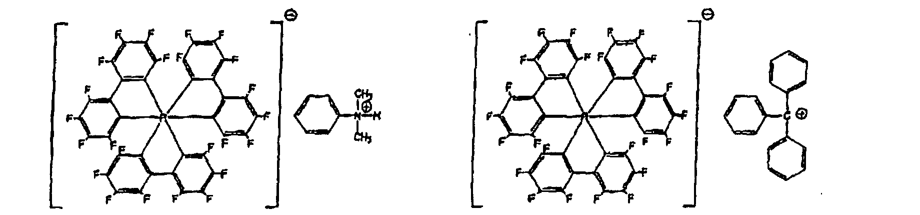

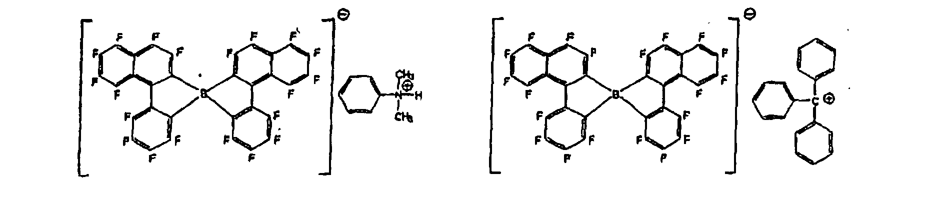

6. Système catalytique selon une quelconque des revendications 1 à 5, **caractérisé en ce que** le métallocène employé est un composé de formule (V): 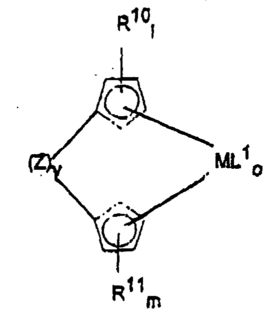 dans laquelle:
- M est un métal des groupes III, IV ,V ou VI de la Classification périodique des éléments, notamment Ti, Zr ou Hf,
- les radicaux R¹⁰, identiques ou différents, consistent en un atome d'hydrogène ou un groupe SiR₃¹² dans lequel les radicaux R¹², identiques ou différents, sont des atomes d'hydrogène ou des radicaux hydrocarbonés en C₁ - C₄₀,
ou R10 est un radical hydrocarboné en C1 à C30,
ou deux ou plusieurs des radicaux R¹⁰ peuvent être liés entre eux de façon que les restes R¹⁰ et les atomes du noyau cyclopentadiénique auquel ils sont liés forment un noyau en C₄ - C₂₄, lequel peut être substitué,
- les radicaux R¹¹, identiques ou différents, consistent en un atome d'hydrogène
ou un groupe SiR₃¹² dans lequel les radicaux R¹², identiques ou différents, sont des atomes d'hydrogène ou des radicaux hydrocarbonés en C₁ - C₄₀,
ou R11 est un radical hydrocarboné en C1 à C30,
ou deux ou plusieurs des radicaux R¹¹ peuvent être liés entre eux de façon que les restes R¹⁰ et les atomes du noyau cyclopentadiénique auquel ils sont liés forment un noyau en C₄ - C₂₄, lequel peut être substitué,
- 1 est égal à 5 quand v = 0 ou à 4 quand v = 1
- m est égal à 5 quand v = 0 ou à 4 quand v = 1
- les radicaux L¹, identiques ou différents, consistent en un atome d'hydrogène, un radical hydrocarboné en C₁ - C₁₀, un atome d'halogène, ou un groupe OR¹⁶, SR¹⁶, OSiR¹⁶₃, SiR¹⁶₃, PR₂¹⁶ ou NR₂¹⁶,dans lesquels les radicaux R¹⁶ sont un atome d'halogène, un groupe alkyl en C₁ - C₁₀, un groupe haloalkyl en C₁ - C₁₀, groupe aryl en C₆ - C₂₀, ou un groupe haloaryl en C₆ - C_{20,}
ou
les radicaux L¹ sont des radicaux toluolsulfonyl, trifluoroacétyl, trifluoroacétoxyl, trifluorométhansulfonyl, nonafluorbutansulfonyl ou 2,2,2-trifluoroéthansulfonyl
- o est un nombre entier de 1 à 4, de préférence est égal à 2,
- Z est un élément structurel de pontage reliant les deux noyaux cyclopentadiényl entre eux, et
- v est égal à 0 ou 1.

7. Système catalytique selon la revendication 6, **caractérisé en ce que**, dans la formule (V), Z est M²R¹³R¹⁴
- M² étant C, Si, Ge ou Sn
- R¹³ et R¹⁴ identiques ou différents, consistent en un radical hydrocarboné en C₁ - C₂₀ ou un radical triméthylsilyle.

8. Système catalytique selon la revendication 6, **caractérisé en ce que**, dans la formule (V), Z est choisi dans le groupe comprenant:
CH₂, CH₂-CH₂, CH(CH₃)CH₂, CH(C₄H₉)C(CH₃)₂(CH₃)₂Si, (CH₃)₂ Ge, (CH₃)₂Sn, (C₆H₅)₂Si, (C₆H₅)₂(CH₃)Si, (C₆H₅)₂Ge, (C₆H₅)₂Sn, (CH₂)₄Si,
CH₂Si(CH₃)₂, o-C₈H₄ ou 2,2'-(C₈H₄)₂.

9. Système catalytique selon la revendication 6, **caractérisé en ce que**, dans la formule (V), le métallocène est un des composés suivants :
- dichlorure de diméthylsilandiylbis(indényl)-zirconium,
- dichlorure de diméthylsilandiylbis(4-naphtyl-indényl)-zirconium,
- dichlorure de diméthylsilandiylbis(2-méthyl-benzo-indényl)-zirconium,
- dichlorure de diméthylsilandiylbis(2-méthyl-indényl)-zirconium,
- dichlorure de diméthylsilandiylbis[2-méthyl-4-(1-naphtyl-indényl]-zirconium,
- dichlorure de diméthylsilandiylbis[2-méthyl-4-(2-naphtyl-indényl]-zirconium,
- dichlorure de diméthylsilandiylbis(2-méthyl-4-phényl-indényl)-zirconium,
- dichlorure de diméthylsilandiylbis(2-méthyl-4-t-butyl-indényl)-zirconium,
- dichlorure de diméthylsilandiylbis(2-méthyl-4-isopropyl-indényl)-zirconium,
- dichlorure de diméthylsilandiylbis(2-méthyl-4-éthyl-indényl)-zirconium,
- dichlorure de diméthylsilandiylbis(2-méthyl-4-acénaphtyl-indényl)-zirconium,
- dichlorure de diméthylsilandiylbis(2-4-diméthyl-indényl)-zirconium,
- dichlorure de diméthylsilandiylbis(2-éthyl-indényl)-zirconium,
- dichlorure de diméthylsilandiylbis(2-éthyl-4-éthyl-indényl)-zirconium,
- dichlorure de diméthylsilandiylbis(2-éthyl-4-phényl-indényl)-zirconium,
- dichlorure de diméthylsilandiylbis(2-méthyl-4,5-benzo-indényl)-zirconium,
- dichlorure de diméthylsilandiylbis(2-méthyl-4,6-diisopropyl-indényl)-zirconium,
- dichlorure de diméthylsilandiylbis(2-méthyl-4,5-diisopropyl-indényl)-zirconium,
- dichlorure de diméthylsilandiylbis(2,4,6-triméthyl-indényl)-zirconium,
- dichlorure de diméthylsilandiylbis(2,5,6-triméthyl-indényl)-zirconium,
- dichlorure de diméthylsilandiylbis(2,4,7-triméthyl-indényl)-zirconium,
- dichlorure de diméthylsilandiylbis(2-méthyl-5-isobutyl-indényl)-zirconium,
- dichlorure de diméthylsilandiylbis(2-méthyl-5-t-butyl-indényl)-zirconium,
- dichlorure de méthyl(phényl)silandiylbis(2-méthyl-4-phényl-indényl)-zirconium,
- dichlorure de méthyl(phényl)silandiylbis(2-méthyl-4,6-diisopropyl-indényl)-zirconium,
- dichlorure de méthyl(phényl)silandiylbis(2-méthyl-4-isopropyl-indényl)-zirconium,
- dichlorure de méthyl(phényl)silandiylbis(2-méthyl-4,5-benzo-indényl)-zirconium,
- dichlorure de méthyl(phényl)silandiylbis(2-méthyl-4,5-méthylbenzoindényl)-zirconium,
- dichlorure de méthyl(phényl)silandiylbis(2-méthyl-4,5-tétraméthylbenzoindényl)-zirconium,
- dichlorure de méthyl(phényl)silandiylbis(2-méthyl-4-acénapht-indényl)-zirconium,
- dichlorure de méthyl(phényl)silandiylbis(2-méthyl-indényl)-zirconium,
- dichlorure de méthyl(phényl)silandiylbis(2-méthyl-5-isobutyl-indényl)-zirconium,
- dichlorure de 1,2-éthandiylbis(2-méthyl-4-phényl-indényl)-zirconium,
- dichlorure de 1,4-butandiylbis(2-méthyl-4-phényl-indényl)-zirconium,
- dichlorure de 1,2-éthandiylbis(2-méthyl-4,6-diisopropyl-indényl)-zirconium,
- dichlorure de 1,4-butandiylbis(2-méthyl-4-isopropyl-indényl)-zirconium,
- dichlorure de 1,4-butandiylbis(2-méthyl-4-5-benzo-indényl)-zirconium,
- dichlorure de 1,2-éthandiylbis(2-méthyl-4,5-benzo-indényl)-zirconium,
- dichlorure de 1,2-éthandiylbis(2,4,7-triméthyl-indényl)-zirconium,
- dichlorure de 1,2-éthandiylbis(2-méthyl-indényl)-zirconium,
- dichlorure de 1,4-butandiylbis(2-méthyl-indényl)-zirconium,
- [4-(η⁵-cyclopentadiényl)-4,6,6-triméthyl-(η⁵-4,5-tétrahydropentalen)]-dichlorozirconium,
- [4-(η⁵-3'-triméthyl-silylcyclopentadiényl)-4,6,6-triméthyl-(η⁵-4,5-tétrahydropentalen)] dichlorozirconium,
- [4-(η⁵-3'-isopropyl-cyclopentadiényl)-4,6,6-triméthyl-(η⁵-4,5-tétrahydropentalen)]-dichlorozirconium,
- [4-(η⁵-cyclopentadiényl)-4,7,7-triméthyl-(η⁵-4,5,6,7-tétrahydroindényl)]-dichlorotitane
- [4-(η⁵-cyclopentadiényl)-4,7,7-triméthyl-(η⁵-4,5,6,7-tétrahydroindényl)]-dichlorozirconium,
- [4-(η⁵-cyclopentadiényl)-4,7,7-triméthyl-(η⁵-4,5,6,7-tétrahydroindényl)]-dichlorohafnium,
- [4-(η⁵-3'-ter.butyl-cyclopentadiényl)-4,7,7-triméthyl-(η⁵-4,5,6,7-tétrahydroindényl)]-dichlorotitane,
- [4-(η⁵-3'-isopropyl-cyclopentadiényl)-4,7,7-triméthyl-(η⁵-4,5,6,7-tétrahydroitzdényl)]-dichlorotitane,
- [4-(η⁵-3'-méthyl-cyclopentadiényl)-4,7,7-triméthyl-(η⁵-4,5,6,7-tétrahydroindényl)]-dichlorotitane,
- [4-(η⁵-3'-triméthylsilyl-cyclopentadiényl)-2-triméthylsilyl 4,7,7-triméthyl-(η⁵-4,5,6,7- tétrahydro-indényl)]-dichlorotitane,
- [4-(η⁵-3'-tert.butyl-cyclopentadiényl)-4,7,7-triméthyl-(η⁵-4,5,6,7-tétrahydroindényl)]- dichlorozirconium,
- (tert.butyl-amido)-(tétraméthyl-η⁵-cyclopentadiényl)]-diméthylsilyldichlorotitane
- (tert.butyl-amido)-(tétraméthyl-η⁵-cyclopentadiényl)]-1,2-éthandiyldichlorotitane
- (méthyl-amido)-(tétraméthyl-η⁵-cyclopentadiényl)]-diméthylsilyldichlorotitane
- (méthyl-amido)-(tétraméthyl-η⁵-cyclopentadiényl)]-1,2-éthandiyldichlorotitane
- dichlorure de bis-(cyclopentadiènyl)-zirconium,
- dichlorure de bis-(n-butylcyclopentadiènyl)-zirconium,
- dichlorure de bis-(1,3-diméthylcyclopentadiényl)-zirconium,
- tétrachloro-{1-[bis(η⁵-1H-indén-1-yliden)méthylsilyl]-3-η⁵-cyclopenta-2,4-dièn-1-yliden)-3-η⁵-9H-fluorén-9-yliden)butan}di-zirconium,
- tétrachloro-{2-[bis(η⁵-2-méthyl-1H-indén-1-yliden)méthoxysilyl]-5-(η⁵-2,3,4,5-tétraméthylcyclopenta-2,4-dien-1-yliden)-5-(η⁵-9H-fluorén-9-yliden)hexan} di-zirconium,
- tétrachloro-{1-[bis(η⁵-1H-indén-1-yliden)méthylsilyl]-6-(η⁵-cyclopenta-2,4-dièn-1-yliden)- (6-η⁵-9H-fluorén-9-yliden)-3-oxaheptan}di-zirconium,
- dichlorure de diméthylsilandiylbis(2-méthyl-4-(tert.butyl-phényl-indényl)-zirconium,
- dichlorure de diméthylsilandiylbis(2-méthyl-4-(4-méthyl-phényl-indényl)-zirconium,
- dichlorure de diméthylsilandiylbis(2-méthyl-4-(4-éthyl-phényl-indényl)-zirconium,
- dichlorure de diméthylsilandiylbis(2-méthyl-4-(4-trifluorométhyl-phénylindényl)-zirconium,
- dichlorure de diméthylsilandiylbis(2-méthyl-4-(4-méthoxy-phényl-indényl)-zirconium,
- dichlorure de diméthylsilandiylbis(2-éthyl-4-(4-tert.butyl-phényl-indényl)-zirconium,
- dichlorure de diméthylsilandiylbis(2-éthyl-4-(4-méthyl-phényl-indényl)-zirconium,
- dichlorure de diméthylsilandiylbis(2-éthyl-4-(4-éthyl-phényl-indényl)-zirconium,
- dichlorure de diméthylsilandiylbis(2-éthyl-4-(4-trifluorométhyl-phénylindényl)-zirconium,
- dichlorure de diméthylsilandiylbis(2-éthyl-4-(4-méthoxy-phényl-indényl)-zirconium,
- diméthylsilandiylbis(2-méthyl-4-(4-tert.butyl-phényl-indényl)-zirconiumdiméthyle,
- diméthylsilandiylbis(2-méthyl-4-(4-méthyl-phényl-indényl)-zirconium,
- dichlorure de diméthylsilandiylbis(2-méthyl-4-(4-éthyl-phényl-indényl)-zirconiumdiméthyle,
- diméthylsilandiylbis(2-méthyl-4-(4-trifluorométhyl-phényl-indényl)-zirconium diméthyle,
- diméthylsilandiylbis(2-méthyl-4-(4-méthoxy-phényl-indényl)-zirconium diméthyle,
- diméthylsilandiylbis(2-éthyl-4-(4-tert.butyl-phényl-indényl)-zirconium diméthyle,
- diméthylsilandiylbis(2-éthyl-4-(4-méthyl-phényl-indényl)-zirconium diméthyle,
- diméthylsilandiylbis(2-éthyl-4-(4-éthyl-phényl-indényl)-zirconium diméthyle,
- diméthylsilandiylbis(2-éthyl-4-(4-trifluorométhyl-phényl-indényl)-zirconium diméthyle,
- diméthylsilandiylbis(2-éthyl-4-(4-méthoxy-phényl-indényl)-zirconium diméthyle,

10. Système catalytique selon une quelconque des revendications 1 à 10, **caractérisé en ce que**, en tant que support on utilise un oxyde inorganique, en particulier oxyde de silice, oxyde d'aluminium, zéolite, MgO, ZrO₂, TiO₂, B₂O₃, CaO, ZnO, ThO₂, Na₂CO₃, K₂CO₃, CaCO₃, MgCO₃, Na₂SO₄, Al₂(SO₄)₃, BaSO₄, KNO₃, Mg(NO₃)₂, Al(NO₃)₃, Na₂O, K2O Li₂O ou au moins un polymère.

11. Procédé de fabrication d'une polyoléfine par polymérisation d'une ou plusieurs oléfines en présence d'un système catalytique selon une quelconque des revendications 1 à 10.

12. Application d'un système catalytique selon une quelconque des revendications 1 à 10 à la fabrication de polyoléfines.
